(19) Europäisches Patentamt
European Patent Office
Office européen des brevets

(11) EP 4 663 783 A1

(12) **EUROPEAN PATENT APPLICATION**
published in accordance with Art. 153(4) EPC

(43) Date of publication:
**17.12.2025 Bulletin 2025/51**

(21) Application number: 23935360.0

(22) Date of filing: **28.04.2023**

(51) International Patent Classification (IPC):
$C21D\ 9/46$ (2006.01)    $C21D\ 9/56$ (2006.01)
$C23C\ 2/02$ (2006.01)    $C23C\ 2/06$ (2006.01)
$C23C\ 2/28$ (2006.01)    $C22C\ 38/00$ (2006.01)
$C22C\ 38/06$ (2006.01)    $C22C\ 38/60$ (2006.01)

(52) Cooperative Patent Classification (CPC):
**C21D 9/46; C21D 9/56; C23C 2/02; C23C 2/06;
C23C 2/28;** C22C 38/00; C22C 38/06; C22C 38/60

(86) International application number:
**PCT/JP2023/016785**

(87) International publication number:
**WO 2024/224582 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **JFE Steel Corporation**
**Tokyo 100-0011 (JP)**

(72) Inventors:
• **YAMAMOTO, Shunsuke**
**Tokyo 100-0011 (JP)**

• **KANAZAWA, Tomomi**
**Tokyo 100-0011 (JP)**
• **TAMAKI, Shogo**
**Tokyo 100-0011 (JP)**
• **HOSHINO, Katsuya**
**Tokyo 100-0011 (JP)**
• **TAKASHIMA, Katsutoshi**
**Tokyo 100-0011 (JP)**
• **SAWANISHI, Chikaumi**
**Tokyo 100-0011 (JP)**

(74) Representative: **Haseltine Lake Kempner LLP**
**Bürkleinstrasse 10**
**80538 München (DE)**

(54) **METHOD FOR PRODUCING HIGH-STRENGTH HOT-DIP GALVANIZED STEEL SHEET**

(57) Provided is a high-strength hot-dip galvanized steel sheet in which an appearance quality of the steel sheet can be ensured, in which excellent LME cracking resistance can be exhibited, and in which degradation in resistance to delayed fracture due to hydrogen embrittlement can be inhibited.

A method for manufacturing a high-strength hot-dip galvanized steel sheet includes subjecting a steel sheet having a predetermined Si content to an oxidation treatment; subjecting the steel sheet to reduction-annealing; and subsequently subjecting the steel sheet to hot-dip galvanizing. The oxidation treatment includes oxidizing the steel sheet in an oxidation step in which the steel sheet is caused to have a temperature within a range of 500°C or greater and 800°C or less in an atmosphere containing $O_2$ in an amount of 500 vol-ppm or greater and $N_2$. Regarding the reduction-annealing, a first stage includes first reduction-annealing that includes holding the steel sheet at a predetermined temperature for a predetermined period in an atmosphere that is an annealing atmosphere, the atmosphere having a dew point of -45°C or greater and +20°C or less and containing hydrogen in an amount of 5.0 vol.% or greater and 25 vol.% or less with a balance of $N_2$, and a second stage includes second reduction-annealing that includes holding the steel sheet at a predetermined temperature for a predetermined period in an atmosphere that is an annealing atmosphere, the atmosphere having a dew point of -10°C or greater and +20°C or less and containing hydrogen in an amount of 2.0 vol.% or greater and 8.0 vol.% or less with a balance of $N_2$, the hydrogen being present in a hydrogen concentration adjusted to satisfy $H_2a > H_2b$, where $H_2a$ is the hydrogen concentration for the first reduction-annealing of the first stage, and $H_2b$ is the hydrogen concentration for the second reduction-annealing of the second stage.

# FIG. 1

**Description**

Technical Field

The present invention relates to a method for manufacturing a high-strength hot-dip galvanized steel sheet having excellent resistance to resistance-welding cracking and excellent delayed fracture properties.

Background Art

Today, there is a strong demand to improve the fuel efficiency of automobiles to protect the global environment. There is also a strong demand to improve the safety of automobiles to ensure the safety of occupants in the event of a crash. Responding to these demands requires a reduction in the weight and an increase in the strength of automobile bodies to be both achieved. Regarding hot-dip galvanized steel sheets, which are used as materials for automotive parts, efforts are actively being made to reduce their thickness by increasing their strength. Since many automotive parts are manufactured by subjecting a steel sheet to a forming process, such steel sheets are required to have not only high strength but also excellent formability.

Various methods for increasing the strength of hot-dip galvanized steel sheets exist and include methods that enable an increase in strength without significantly compromising the formability of the hot-dip galvanized steel sheet; examples of such methods include utilization of martensite associated with the addition of C and solid solution strengthening associated with the addition of Si. Regarding the manufacture of automotive parts, in many cases, press-formed parts are combined together by resistance welding (spot welding). If a steel sheet contains large amounts of C and Si, there is a concern that during or after resistance welding, in a state in which a residual stress has been generated in the vicinity of the weld, zinc in the coated layer may melt and diffuse into grain boundaries, which may cause liquid metal embrittlement (LME) and result in the occurrence of intergranular cracking (LME cracking) in the steel sheet. In particular, if welding is performed in a state in which a welding electrode is angled with respect to the steel sheet, residual stress may increase, which may result in cracking. Since it is believed that increasing the strength of a steel sheet increases the residual stress, there is a concern about the occurrence of LME cracking associated with the increase in the strength of the steel sheet.

Furthermore, it is known that as the strength of a steel material increases, a delayed fracture due to hydrogen embrittlement is more likely to occur. In particular, this tendency is prominent in the case of high strength steels having a tensile strength of 1180 MPa or greater. The "delayed fracture" is a phenomenon in which when a high strength steel material experiences a static load stress (load stress lower than a tensile strength), and a certain period of time elapses in that state, a brittle fracture suddenly occurs, without being substantially accompanied by plastic deformations as externally observed. In many cases, the delayed fracture is caused by hydrogen that has entered the steel sheet as a result of corrosion that has occurred in the use environment. In other cases, hydrogen that has entered the steel sheet in an annealing step in a continuous galvanizing line (CGL) also degrades the mechanical properties of the steel sheet and causes a brittle fracture therein; this is particularly true with steel sheets having a tensile strength of greater than 980 MPa.

As described, there is a need for a high strength steel sheet that has excellent resistance to resistance-welding cracking (hereinafter, this resistance is also simply referred to as "LME cracking resistance") and in which degradation in resistance to delayed fracture due to hydrogen present in the steel is inhibited.

The related art discloses methods for addressing coating bare spot defects that occur in Si-containing steels. In a method disclosed in Patent Literature 1, a surface of a Si-containing steel is oxidized by heating the steel to 700°C or greater in an $O_2$-containing atmosphere, and then, oxides in a surface layer of the steel sheet are reduced in a $H_2$-containing atmosphere having a dew point of 5 °C or greater. In a method disclosed in Patent Literature 2, a surface of a Si-containing steel is oxidized by heating the steel to a temperature of 600°C or greater and 850°C or less in an $O_2$-containing atmosphere, and then, oxides in a surface layer of the steel sheet are reduced in an atmosphere having a dew point of 5°C or greater and containing $H_2O$ in an amount of 500 vol-ppm or greater and 5000 vol-ppm or less and $H_2$, to reduce the oxidized steel sheet. Similarly, in a method disclosed in Patent Literature 3, a surface of a Si-containing steel is oxidized by increasing an air ratio in a direct firing furnace (DFF), and then, oxides in a surface layer of the steel sheet are reduced in an atmosphere having a log $(P_{H2O}/P_{H2})$ of -3.4 or greater and -1.1 or less. With these methods, an amount of oxidation in steel sheets can be adjusted, which makes it possible to ensure a good appearance quality, but problems exist in that sufficient LME cracking resistance and resistance to delayed fracture cannot be achieved in the case of the inhibition of LME cracking that occurs in Si-containing steels and in the case in which a large amount of hydrogen that enters the steel during annealing remains therein.

Citation List

Patent Literature

| PTL 1: | Japanese Patent No. 5652219 |
| PTL 2: | Japanese Patent No. 6052270 |
| PTL 3: | Japanese Patent No. 6172297 |

Summary of Invention

Technical Problem

Accordingly, an object of the present invention is to provide a high-strength hot-dip galvanized steel sheet in which an appearance quality of the steel sheet can be ensured, in which excellent LME cracking resistance can be exhibited, and in which degradation in resistance to delayed fracture due to hydrogen embrittlement can be inhibited.
Solution to Problem

The present inventors discovered that by properly controlling the $O_2$ concentration and the temperature for the oxidation of the steel sheet, an appearance quality of the steel sheet can be ensured, and that by optimizing the $H_2O$ concentration and the $H_2$ concentration for the reduction annealing, excellent resistance to resistance-welding cracking can be achieved, and degradation in resistance to delayed fracture due to hydrogen embrittlement can be inhibited. Accordingly, the present inventors completed the present invention.

The present invention was made based on the above-described findings. Specifically, primary features of the present invention are as follows.

[1] A method for manufacturing a high-strength hot-dip galvanized steel sheet, the method including:

subjecting a steel sheet containing, in mass%, Si in an amount of 0.45% or greater and 2.0% or less to an oxidation treatment;
subsequently subjecting the steel sheet to reduction-annealing; and
subsequently subjecting the steel sheet to hot-dip galvanizing, wherein
the oxidation treatment includes oxidizing the steel sheet in an oxidation step in which the steel sheet is caused to have a temperature within a range of 500°C or greater and 800°C or less in an atmosphere containing $O_2$ in an amount of 500 vol-ppm or greater and $N_2$,
the reduction-annealing is carried out in a first stage and a second stage that use different respective atmospheres,
the first stage includes first reduction-annealing that includes holding the steel sheet at a temperature of 650°C or greater and 900°C or less for a period of 20 seconds or more and 150 seconds or less in an atmosphere that is an annealing atmosphere, the atmosphere having a dew point of -45°C or greater and +20°C or less and containing hydrogen in an amount of 5.0 vol.% or greater and 25 vol.% or less with a balance of $N_2$, and
the second stage includes second reduction-annealing that includes holding, after the steel sheet undergoes the first reduction-annealing, the steel sheet at a temperature of 700°C or greater and 950°C or less for a period of 30 seconds or more and 300 seconds or less in an atmosphere that is an annealing atmosphere, the atmosphere having a dew point of -10°C or greater and +20°C or less and containing hydrogen in an amount of 2.0 vol.% or greater and 8.0 vol.% or less with a balance of $N_2$, the hydrogen being present in a hydrogen concentration adjusted to satisfy $H_2a > H_2b$, where $H_2a$ is the hydrogen concentration for the first reduction-annealing of the first stage, and $H_2b$ is the hydrogen concentration for the second reduction-annealing of the second stage.

[2] The method for manufacturing a high-strength hot-dip galvanized steel sheet according to [1], wherein the reduction-annealing is carried out in an annealing furnace configured to perform annealing in two or more different atmospheres in two or more sections divided in a steel sheet traveling direction.
[3] The method for manufacturing a high-strength hot-dip galvanized steel sheet according to [1] or [2], further including performing an alloying treatment on a hot-dip galvanized coating after the steel sheet is subjected to the hot-dip galvanizing.
[4] The method for manufacturing a high-strength hot-dip galvanized steel sheet according to any one of [1] to [3], wherein the oxidation treatment is performed in a step of heating the steel sheet that is performed as a step preceding the reduction-annealing.

[5] The method for manufacturing a high-strength hot-dip galvanized steel sheet according to [4], wherein the oxidation treatment is performed over a temperature spread of at least 50°C or greater within the range of 500°C or greater and 800°C or less.

[6] The method for manufacturing a high-strength hot-dip galvanized steel sheet according to any one of [1] to [5], wherein the oxidation treatment includes oxidizing a surface of the steel sheet in a direct firing furnace (DFF) with an air ratio in at least a portion of the atmosphere in the furnace being 1.0 or greater.

[7] The method for manufacturing a high-strength hot-dip galvanized steel sheet according to any one of [1] to [6], wherein the oxidation treatment is carried out in a direct firing furnace configured to perform oxidation in two or more atmospheres in two or more sections divided in a steel sheet traveling direction,

in a first heating zone located upstream in the furnace, the steel sheet is heated at an average heating rate over a range of 200°C and greater of 10°C/s or greater and 50°C/s or less to a temperature greater than or equal to $T_1$ (°C), where $T_1$ is calculated from equation (1) below, in which $\alpha$ is an air ratio associated with a temperature range over which the oxidation treatment is performed, and

in a second heating zone located downstream in the furnace, the steel sheet, after passing through the first heating zone, is heated at an average heating rate over a range greater than $T_1$ of 5°C/s or greater and 30°C/s or less to a temperature greater than or equal to $T_2$ (°C), with an air ratio being $\leq 0.9$, where $T_2$ is calculated from equation (2) below,

$$T_1 = 28.2[Si] + 7.95[Mn] - 86.2\alpha + 666 \qquad (1)$$

$$T_2 = T_1 + 30 \qquad (2)$$

where [Si] is a content (mass%) of Si present in the steel sheet, and [Mn] is a content (mass%) of Mn present in the steel sheet.

[8] The method for manufacturing a high-strength hot-dip galvanized steel sheet according to any one of [1] to [7], wherein the oxidation treatment is performed in an atmosphere containing one or more of CO, $CO_2$, $H_2O$, and $NO_x$, in addition to the $O_2$ in an amount of 500 vol-ppm or greater and the $N_2$.

[9] The method for manufacturing a high-strength hot-dip galvanized steel sheet according to any one of [1] to [5] and [8], wherein the oxidation treatment is performed in a radiant tube heating furnace.

[10] The method for manufacturing a high-strength hot-dip galvanized steel sheet according to any one of [1] to [5], [8], and [9], wherein the reduction-annealing is performed in a radiant tube heating and soaking furnace.

[11] The method for manufacturing a high-strength hot-dip galvanized steel sheet according to any one of [1] to [10], wherein the annealing atmosphere for the second reduction-annealing contains hydrogen in an amount of 2.0 vol.% or greater and less than 5.0 vol.% with a balance of $N_2$.

[12] The method for manufacturing a high-strength hot-dip galvanized steel sheet according to any one of [1] to [11], wherein the annealing atmosphere for the first reduction-annealing contains hydrogen in an amount of 5.0 vol.% or greater and 12 vol.% or less with a balance of $N_2$, and the annealing atmosphere for the second reduction-annealing contains hydrogen in an amount of 2.0 vol.% or greater and less than 3.0 vol.% with a balance of $N_2$. Advantageous Effects of Invention

The present invention can provide a high-strength hot-dip galvanized steel sheet that has excellent LME cracking resistance of welds and a good appearance quality and in which an amount of hydrogen in the steel, which can be a cause of degradation in resistance to delayed fracture, is sufficiently reduced.

Brief Description of Drawings

[Fig. 1] Fig. 1 is a diagram illustrating a structure of a testing material for the evaluation of LME cracking resistance.
[Fig. 2] In Fig. 2, an upper diagram is a plan view of a sheet combination including a weld, and a lower diagram illustrates a cross section of the sheet combination including a weld, in a thickness direction, taken at a cut position illustrated in the upper diagram.

Description of Embodiments

Embodiments of the present invention will be described below.

In the description below, the contents of elements in the chemical composition of a Si-containing steel sheet and the contents of elements in the chemical composition of a coated layer are all in units of mass%, which is represented simply by "%" unless otherwise specified. Furthermore, in the present specification, when "to" is used to describe a numerical range, the range includes the number preceding "to" as the lower limit and the number following "to" as the upper limit. Furthermore, in the present specification, "a steel sheet has high strength" means that the steel sheet has a tensile strength TS of 590 MPa or greater as measured in accordance with JIS Z 2241 (2011).

As referred to herein, the steel sheet is a steel sheet manufactured by cold rolling and/or hot rolling. Although steel sheets are typically manufactured by cold rolling and/or hot rolling, the present invention is not limited to any particular method for manufacturing a steel sheet.

First, the chemical composition of the Si-containing steel sheet will be described.

Si: 0.45% or greater and 2.0% or less

Si has a large effect in increasing the strength of steel by dissolving into the steel (solid solution strengthening ability) while avoiding significantly compromising formability. Accordingly, Si is an element effective for achieving an increased strength of the steel sheet. On the other hand, Si is an element that has a negative influence on the resistance to resistance-welding cracking in a weld. In instances where Si is added to achieve an increased strength of the steel sheet, the Si needs to be contained in an amount of 0.45% or greater. If the Si content is less than 0.45%, problems associated with the resistance to resistance-welding cracking of welds do not particularly arise, and, therefore, there is not a great need to apply the present invention. On the other hand, if the Si content is greater than 2.0%, hot rollability and cold rollability significantly decrease, which adversely affects productivity and causes a decrease in the ductility of the steel sheet itself. Accordingly, Si is contained in an amount within a range of 0.45% or greater and 2.0% or less. The Si content is preferably 0.7% or greater and more preferably 0.9% or greater. Furthermore, the Si content is preferably 1.8% or less and more preferably 1.6% or less.

Regarding the Si-containing steel sheet of the present embodiment, the inclusion of Si in an amount within the above-mentioned range is an essential requirement, whereas the other components are not particularly limited and may be any components that are within a compositional range of a typical steel sheet. Note that in instances where the Si-containing steel sheet of the present embodiment is provided as a high strength steel sheet having a tensile strength (TS) of 590 MPa or greater, it is preferable to employ the following chemical composition.

C: 0.3% or less

C contributes to the formation of steel microstructures such as martensite, thereby improving the formability of the steel sheet. In instances where C is contained, it is preferable, in terms of achieving good weldability, that the C content be 0.3% or less. More preferably, the C content is 0.25% or less. While the lower limit of the C content is not particularly limited, it is preferable, in terms of achieving good formability, that C be present in an amount of 0.03% or greater. More preferably, C is contained in an amount of 0.05% or greater.

Mn: 1.0% or greater and 4.0% or less

Mn is an element that has effects of strengthening steel through solid solution strengthening, thereby achieving an increased strength of the steel, and of increasing hardenability, thereby promoting the formation of retained austenite, bainite, and martensite. These effects are produced when Mn is present in an amount of 1.0% or greater. On the other hand, when the Mn content is 4.0% or less, the above-described effects can be produced without causing an increase in cost. Accordingly, the Mn content is preferably 1.0% or greater and 4.0% or less. More preferably, the Mn content is 1.8% or greater. Furthermore, the Mn content is more preferably 3.3% or less.

P: 0.1% or less (excluding 0%)

Limiting a P content can prevent a decrease in weldability. In addition, segregation of P at grain boundaries can be prevented, and, consequently, degradation in ductility, bendability, and toughness can be prevented. If P is added in large amounts, ferrite transformation is promoted, which results in an increased grain size. Accordingly, the P content is preferably 0.1% or less. The lower limit of the P content is not particularly limited and is greater than 0% because of restrictions on the production technology. Typically, the lower limit is 0.001% or greater.

S: 0.03% or less (excluding 0%)

A S content is preferably 0.03% or less and more preferably 0.02% or less. Limiting the S content can prevent a decrease in weldability and can also prevent a decrease in ductility that may occur during hot rolling; consequently, hot cracking can be inhibited, and surface properties can be significantly improved. Furthermore, limiting the S content can prevent a decrease in the ductility, bendability, and stretch flangeability of the steel sheet that may be caused if S, which is an impurity element, forms a coarse sulfide. These problems become prominent if the S content is greater than 0.03%, and, therefore, it is preferable that the S content be reduced as much as possible. The lower limit of S is not particularly limited and is greater than 0% because of restrictions on the production technology. Typically, the lower limit is 0.0001% or greater.

N: 0.010% or less (excluding 0%)

Preferably, a N content is 0.010% or less. When the N content is 0.010% or less, it is possible to prevent N from forming coarse nitrides with Ti, Nb, and/or V at a high temperature and, therefore, prevent impairment of an effect of increasing the strength of the steel sheet due to the addition of Ti, Nb, and/or V. Furthermore, when the N content is 0.010% or less, it is also possible to prevent a decrease in toughness. In addition, when the N content is 0.010% or less, it is possible to prevent slab cracking and surface defects from occurring during hot rolling. The N content is preferably 0.005% or less, more preferably 0.003% or less, and even more preferably 0.002% or less. The lower limit of N is not particularly limited and is greater than 0% because of restrictions on the production technology. Typically, the lower limit is 0.0005% or greater.

Al: 0.1% or less (excluding 0%)

Since Al is thermodynamically most likely to be oxidized, Al is oxidized before Si and Mn are oxidized. Accordingly, Al has an effect of inhibiting Si and Mn from being oxidized in the outermost layer of the steel sheet, thereby promoting the oxidation of Si and Mn in an inner portion of the steel sheet. This effect can be produced when an Al content is 0.01% or greater. On the other hand, if the Al content is greater than 0.1%, cost increases. Accordingly, in instances where Al is added, it is preferable that the Al content be 0.1% or less. The lower limit of Al is not particularly limited and is greater than 0%. Typically, the lower limit is 0.001% or greater.

Optionally, the chemical composition may further contain one or more selected from the group consisting of B: 0.005% or less, Ti: 0.2% or less, Cr: 1.0% or less, Mo: 1.0% or less, Cu: 1.0% or less, Ni: 1.0% or less, Nb: 0.20% or less, Sb: 0.200% or less, V: 0.5% or less, Ta: 0.1% or less, W: 0.5% or less, Zr: 0.1% or less, Sn: 0.20% or less, Ca: 0.005% or less, Mg: 0.005% or less, and rare earth metals (REMs): 0.005% or less.

B: 0.005% or less

B is an element effective for improving the hardenability of steel. It is preferable, in terms of improving hardenability, that a B content be 0.0003% or greater. More preferably, the B content is 0.0005% or greater. However, addition of an excessive amount of B reduces formability, and, therefore, it is preferable that the B content be 0.005% or less.

Ti: 0.2% or less

Ti is effective for the precipitation strengthening of steel. The lower limit of a Ti content is not particularly limited, and it is preferable, in terms of producing an effect of adjusting strength, that Ti be present in an amount of 0.005% or greater. If an excessive amount of Ti is added, however, an excessive amount of a hard phase is formed, which reduces formability. Accordingly, in instances where Ti is added, it is preferable that the Ti content be 0.2% or less. More preferably, the Ti content is 0.05% or less.

Cr: 1.0% or less

Preferably, a Cr content is 0.005% or greater. When the Cr content is 0.005% or greater, hardenability is improved, which can improve a balance between strength and ductility. In instances where Cr is added, it is preferable, from the standpoint of preventing an increase in cost, that the Cr content be 1.0% or less.

Mo: 1.0% or less

Preferably, a Mo content is 0.005% or greater. When the Mo content is 0.005% or greater, an effect of adjusting strength can be produced. The Mo content is more preferably 0.05% or greater. In addition, in instances where Mo is added, it is preferable, from the standpoint of preventing an increase in cost, that the Mo content be 1.0% or less.

Cu: 1.0% or less

Preferably, a Cu content is 0.005% or greater. When the Cu content is 0.005% or greater, formation of a retained $\gamma$ phase can be promoted. In addition, in instances where Cu is added, it is preferable, from the standpoint of preventing an increase in cost, that the Cu content be 1.0% or less.

Ni: 1.0% or less

Preferably, a Ni content is 0.005% or greater. When the Ni content is 0.005% or greater, formation of a retained $\gamma$ phase can be promoted. In addition, in instances where Ni is added, it is preferable, from the standpoint of preventing an increase in cost, that the Ni content be 1.0% or less.

Nb: 0.20% or less

In cases where Nb is contained in an amount of 0.005% or greater, an effect of improving strength can be produced. In addition, in instances where Nb is contained, it is preferable, from the standpoint of preventing an increase in cost, that the Nb content be 0.20% or less.

Sb: 0.200% or less

Sb may be contained to inhibit nitriding and oxidation of a surface of the steel sheet and decarburization in a region extending from the surface of the steel sheet to a depth of several tens of microns caused by oxidation. By inhibiting the nitriding and oxidation of the surface of the steel sheet, Sb prevents a decrease in the amount of martensite formed on the surface of the steel sheet, thereby improving the fatigue properties and surface quality of the steel sheet. It is preferable, in terms of producing these effects, that an Sb content be 0.001% or greater. On the other hand, in terms of achieving good toughness, it is preferable that the Sb content be 0.200% or less.

V: 0.5% or less

In cases where V is contained in an amount of 0.005% or greater, an effect of improving strength can be produced. In addition, in instances where V is contained, it is preferable, from the standpoint of preventing an increase in cost, that the V content be 0.5% or less.

Ta: 0.1% or less

In cases where Ta is contained in an amount of 0.001% or greater, an effect of improving strength can be produced. In addition, in instances where Ta is contained, it is preferable, from the standpoint of preventing an increase in cost, that the Ta content be 0.1% or less.

W: 0.5% or less

In cases where W is contained in an amount of 0.005% or greater, an effect of improving strength can be produced. In addition, in instances where W is contained, it is preferable, from the standpoint of preventing an increase in cost, that the W content be 0.5% or less.

Zr: 0.1% or less

In cases where Zr is contained in an amount of 0.0005% or greater, an effect of improving strength can be produced. In addition, in instances where Zr is contained, it is preferable, from the standpoint of preventing an increase in cost, that the Zr content be 0.1% or less.

Sn: 0.20% or less

Sn inhibits denitrification, deboronation, and the like and is, therefore, an element effective for inhibiting a decrease in the strength of steel. It is preferable, in terms of producing this effect, that Sn be contained in an amount of 0.002% or greater. On the other hand, in terms of achieving good impact resistance, it is preferable that the Sn content be 0.20% or less.

Ca: 0.005% or less

In cases where Ca is contained in an amount of 0.0005% or greater, a morphology of sulfides can be controlled to improve ductility and toughness. In addition, in instances where Ca is contained, it is preferable, from the standpoint of achieving good ductility, that the Ca content be 0.005% or less.

Mg: 0.005% or less

In cases where Mg is contained in an amount of 0.0005% or greater, a morphology of sulfides can be controlled to improve ductility and toughness. In addition, in instances where Mg is contained, it is preferable, from the standpoint of preventing an increase in cost, that the Mg content be 0.005% or less.

REMs: 0.005% or less

In cases where one or more REMs are contained in an amount of 0.0005% or greater, a morphology of sulfides can be controlled to improve ductility and toughness. In addition, in instances where one or more REMs are contained, it is preferable, from the standpoint of achieving good toughness, that the REM content be 0.005% or less.

In the Si-containing steel sheet of the present embodiment, the balance, other than the components described above, is Fe and incidental impurities. Note that the Si-containing steel sheet may be a cold rolled steel sheet or a hot rolled steel sheet.

Now, an oxidation treatment, reduction-annealing, and hot-dip galvanizing will be described.

In the present invention, the temperatures specified for the oxidation treatment, the reduction-annealing, and cooling after the annealing are all temperatures of the steel sheet.

A manufacturing method of the present invention is a method for manufacturing a hot-dip galvanized steel sheet that includes subjecting a steel sheet containing Si in an amount of 0.45% or greater and 2.0% or less to the oxidation treatment, subsequently subjecting the steel sheet to the reduction-annealing, and subsequently subjecting the steel sheet to the hot-dip galvanizing. In an oxidation-heating step, the steel sheet is oxidized by heating the steel sheet in a predetermined oxidizing atmosphere, to form oxidized Fe in a surface layer of the steel sheet. The subsequent reduction-annealing step is composed of a step of reducing the oxidized steel sheet in a first stage and a second stage that use different respective atmospheres.

The first stage of the reduction-annealing includes first reduction-annealing, which includes subjecting the steel sheet to recrystallization annealing in an Fe reducing atmosphere having a predetermined hydrogen concentration and dew point, to reduce the oxidized Fe formed in the oxidation-heating step, thereby forming a reduced iron layer in the surface layer of the steel sheet. The subsequent second stage of the reduction-annealing includes second reduction-annealing, which includes subjecting the steel sheet to recrystallization annealing in an Fe reducing atmosphere having a predetermined hydrogen concentration and dew point, to provide a low-dissolved-Si-and-C-concentration layer for improving LME cracking resistance, in the surface layer of the steel sheet, and to release hydrogen dissolved in the steel from the steel sheet. The steel sheet that has undergone reduction-annealing is cooled to a predetermined temperature and subsequently immersed in a hot-dip galvanizing bath to be hot-dip galvanized. The manufacturing method of the present invention may include performing an alloying treatment on the hot-dip galvanized coating after the steel sheet is subjected to the hot-dip galvanizing, to manufacture a hot-dip galvannealed steel sheet.

In the present invention, the oxidation-heating step and the reduction-annealing step that follows are typically performed in a continuous annealing furnace that includes an oxidation zone (a zone for the oxidation treatment), a reduction zone (a zone for the first reduction-annealing of the reduction-annealing), a soaking zone (a zone for the second reduction-annealing of the reduction-annealing, and a cooling zone, which are disposed in this order, starting from an entry side.

Now, regarding the manufacturing method of the present invention, the oxidation treatment, the reduction-annealing (first reduction-annealing, second reduction-annealing, and cooling after annealing), and the hot-dip galvanizing will be described in this order.

Firstly, the oxidation treatment will be described.

The oxidation treatment includes oxidizing the steel sheet in an oxidation step in which the steel sheet is caused to have a temperature within a range of 500°C or greater and 800°C or less in an atmosphere containing $O_2$ in an amount of 500 vol-ppm or greater and $N_2$. In the present invention, the steel sheet is oxidized by this oxidation treatment and then reduced by the subsequent reduction-annealing to form a reduced iron layer in the surface layer of the steel sheet, thereby preventing Si and Mn from diffusing into the surface layer of the steel sheet and being oxidized therein; consequently, coating properties are ensured.

The $O_2$ concentration of 500 vol-ppm or greater in the atmosphere for the oxidation treatment promotes the oxidation of the steel sheet. If the $O_2$ concentration is less than 500 vol-ppm, the steel sheet is insufficiently oxidized, and, consequently, oxides of Si and Mn are formed, which degrades coating properties.

For the oxidation treatment, the temperature of the steel sheet (a reached maximum temperature of the steel sheet) is specified to be 500°C or greater, and, consequently, the oxidation of the steel sheet is promoted. If the temperature of the steel sheet is less than 500°C, sufficient oxidation is not achieved, and, consequently, oxides of Si and Mn are formed, which degrades coating properties.

On the other hand, if the temperature of the steel sheet (the reached maximum temperature of the steel sheet) is greater than 800°C, the steel sheet is excessively oxidized, and, consequently, reduction cannot be completed in the subsequent reduction-annealing (first step); as a result, in the subsequent reduction-annealing step, a phenomenon called pickup, in which oxides exfoliate and adhere to rolls, occurs. The occurrence of pickup on rolls leads to the formation of indentation flaws in the steel sheet, and, consequently, the appearance of the galvanized steel sheet is significantly impaired.

Now, the reduction-annealing will be described.

The reduction-annealing needs to be carried out in the first stage and the second stage that use different respective atmospheres.

The first reduction-annealing of the first stage is carried out as follows. After the steel sheet undergoes the oxidation treatment, the steel sheet is held at a temperature of 650°C or greater and 900°C or less for a period of 20 seconds or more and 150 seconds or less, in an atmosphere having a dew point of -45°C or greater and +20°C or less and containing hydrogen at a hydrogen concentration of 5.0 vol.% or greater and 25 vol.% or less with a balance of $N_2$.

This first reduction-annealing is performed to reduce, in a reducing atmosphere, oxidized Fe formed by the oxidation treatment, to form a reduced iron layer in the surface layer of the steel sheet, thereby preventing Si and Mn from diffusing into the surface layer of the steel sheet and being oxidized therein, to ensure coating properties. Since reduction does not substantially proceed in the subsequent second reduction-annealing, which uses an atmosphere having a low hydrogen concentration, it is necessary that the reduction of oxidized Fe be completed in this first reduction-annealing. The controlling of the temperature, the dew point, and the hydrogen concentration for the reduction-annealing enables the formation of a layer having concentrations of dissolved Si and dissolved C, which have a negative influence on the LME resistance, with less amount in the surface layer. Although the mechanism for this is not clear, it is known that Si is an easily oxidizable element and is oxidized even in an Fe reducing atmosphere. In particular, when an $H_2O$ concentration is high, oxides are formed within the steel sheet, which, presumably, leads to a decrease in dissolved Si in the vicinity of the oxides. C is oxidized by $H_2O$ present in the atmosphere and released as CO gas to the interior of the furnace, which leads to a decrease in the C concentration in the surface layer of the steel sheet. Presumably, for these reasons, LME cracking resistance is improved.

If the annealing temperature of the steel sheet in the first reduction-annealing step is less than 650°C, the reduction is not sufficiently carried out, which causes oxidized Fe to form roll pickup and to become a cause of defects of the steel sheet, and in addition, in the subsequent second reduction-annealing step, the oxidized Fe is not substantially reduced and, therefore, becomes a cause of coating bare spots. On the other hand, if the annealing temperature of the steel sheet is greater than 900°C, the temperature has a significant influence on a furnace body. Accordingly, the annealing temperature of the steel sheet is specified to be 650°C or greater and 900°C or less.

Regarding the dew point of the atmosphere for the first reduction-annealing step, lowering the dew point to less than -45°C requires equipment for reducing dew points and, therefore, increases costs. On the other hand, if the dew point is greater than +20°C, there is a concern about damage to the furnace body. Accordingly, the dew point is specified to be -45°C or greater and +20°C or less. Regarding the hydrogen concentration, the higher the hydrogen concentration, the earlier the reduction of the oxidized Fe is completed; however, the higher the hydrogen concentration, the more likely it is that hydrogen remains in the steel. If the hydrogen concentration is less than 5.0 vol.%, the reduction is not sufficiently carried out. On the other hand, if the hydrogen concentration is greater than 25 vol.%, the effect of the reduction no longer increases, in addition, large amounts of hydrogen dissolve into the steel, and, in the subsequent second reduction-annealing step, it becomes difficult to sufficiently reduce the amount of hydrogen present in the steel. Accordingly, the hydrogen concentration is specified to be 5.0 vol.% or greater and 25 vol.% or less. From the standpoint mentioned above, it is more preferable that the hydrogen concentration be 10 vol.% or greater. On the other hand, from the standpoint of running cost, it is preferable that the hydrogen concentration be 20 vol.% or less; more preferably, the hydrogen concentration is 15 vol.% or less.

The low-dissolved-Si-and-C-concentration layer in the surface layer for improving LME cracking resistance is more likely to be formed when the dew point is high, and the hydrogen concentration is low. Accordingly, the dew point is preferably -20°C or greater and more preferably -5°C or greater. The hydrogen concentration is preferably 15 vol.% or less. The low-dissolved-Si-and-C-concentration layer for improving LME resistance is formed primarily in the second reduction-annealing step. Preferably, some amount of the low-dissolved-Si-and-C-concentration layer is formed in the first reduction-annealing by using a dew point of -20°C or greater.

Regarding the first reduction-annealing step, if the holding time associated with the temperature of 650°C or greater and 900°C or less is less than 20 seconds, the reduction is not sufficiently completed. On the other hand, since the reduction is sufficiently completed with a holding time of 150 seconds or less, if the holding time is greater than 150 seconds, productivity actually decreases. The low-dissolved-Si-and-C-concentration layer in the surface layer for improving LME cracking resistance is more likely to be formed with increases in the holding time. The amount of hydrogen present in the steel no longer increases after the holding time reaches approximately 20 seconds and is, therefore, not significantly affected by the holding time. For these reasons, the holding time associated with the temperature of 650°C or greater and 900°C or less in the first reduction-annealing step is specified to be 20 seconds or more and 150 seconds or less.

The second reduction-annealing of the second stage is carried out as follows. After the steel sheet undergoes the first reduction-annealing step, the steel sheet is held at a temperature of 700°C or greater and 950°C or less for a period of 30 seconds or more and 300 seconds or less in an atmosphere. The atmosphere has a dew point of -10°C or greater and +20°C or less and contains hydrogen at a hydrogen concentration of 2.0 vol.% or greater and 8.0 vol.% or less with a balance of $N_2$. The hydrogen concentration is a concentration adjusted to satisfy $H_2a > H_2b$, where $H_2a$ is the hydrogen concentration for the first reduction-annealing of the first stage, and $H_2b$ is the hydrogen concentration for the second reduction-annealing of the second stage. This second reduction-annealing step is performed to sufficiently form the low-dissolved-Si-and-C-concentration layer in the surface layer for improving LME cracking resistance, in the steel sheet, the reduction of which has been completed in the first reduction-annealing step, and to release hydrogen from the steel sheet by holding the steel sheet in a low-hydrogen atmosphere.

As stated above, the low-dissolved-Si-and-C-concentration layer in the surface layer for improving LME cracking resistance is more likely to be formed when the dew point is high, and the hydrogen concentration is low.

Accordingly, from the standpoint of sufficiently forming the low-dissolved-Si-and-C-concentration layer in the surface layer, it is preferable that the dew point for the second reduction-annealing step be -10°C or greater; more preferably, the dew point is 0°C or greater. On the other hand, if the dew point is greater than +20°C, the reduced Fe formed in the first reduction-annealing step may be reoxidized and impair coating properties, and in addition, the control of the dew point is difficult, which raises a concern about an influence on the furnace body. Accordingly, the dew point is specified to be -10°C or greater and +20°C or less.

For the second reduction-annealing step, the hydrogen concentration may be 8.0 vol.% or less, which is preferable also from the standpoint of sufficiently forming the low-dissolved-Si-and-C-concentration layer in the surface layer. Furthermore, the hydrogen concentration is preferably less than 5.0 vol.%. Regarding the hydrogen concentration in the steel sheet, the lower the hydrogen concentration, the greater the degree to which the hydrogen dissolved into the steel sheet in the first reduction-annealing step is released; however, it is difficult to perform control to achieve a uniform hydrogen concentration of less than 2.0 vol.% in the furnace, and there is a concern that the steel sheet may be oxidized at a portion having a low hydrogen concentration. Accordingly, the hydrogen concentration is specified to be 2.0 vol.% or greater. The balance of the annealing atmosphere for the second reduction-annealing step includes $N_2$.

In instances where the annealing atmosphere for the first reduction-annealing contains hydrogen in an amount of 5.0 vol.% or greater and 12 vol.% or less with a balance of $N_2$, it is more preferable that the annealing atmosphere for the second reduction-annealing contain hydrogen in an amount of 2.0 vol.% or greater and less than 3.0 vol.% with a balance of $N_2$. By optimizing each of the hydrogen concentrations of the annealing atmospheres of the first reduction-annealing and the second reduction-annealing, it is possible to further reduce the hydrogen in the steel sheet.

If the annealing temperature of the steel sheet in the second reduction-annealing step is less than 700°C, the low-dissolved-Si-and-C-concentration layer in the surface layer is not sufficiently formed, and dehydrogenation is not promoted. On the other hand, if the annealing temperature is greater than 950°C, the temperature has a significant influence on the furnace body. Accordingly, the annealing temperature of the steel sheet is specified to be 700°C or greater and 950°C or less.

Regarding the second reduction-annealing step, the holding time is specified to be 30 seconds or more and 300 seconds or less. If the holding time is less than 30 seconds, the low-dissolved-Si-and-C-concentration layer in the surface layer is not sufficiently formed. On the other hand, if the holding time is greater than 300 seconds, productivity may decrease.

Note that the hydrogen concentration needs to be adjusted such that $H_2a > H_2b$ is satisfied, where $H_2a$ is the hydrogen concentration for the first reduction-annealing of the first stage, and $H_2b$ is the hydrogen concentration for the second reduction-annealing of the second stage. The purpose of this adjustment is to reduce, during the second reduction-annealing of the second stage, the amount of hydrogen that has entered the steel during the first reduction-annealing of the first stage.

In the present invention, high-concentration hydrogen is required for reducing the oxidized Fe, which is formed by the oxidation treatment, in the first reduction-annealing step of the reduction-annealing; therefore, sufficient formation of the low-dissolved-Si-and-C-concentration layer in the surface layer for improving LME cracking resistance is difficult, and large amounts of hydrogen dissolve into the steel. Accordingly, oxidation-reduction and sufficient formation of the low-dissolved-Si-and-C-concentration layer in the surface layer are important, and a balance for the dehydrogenation for the hydrogen present in the steel is important. Because of this, it is necessary to optimize the conditions for the first reduction-annealing step and the second reduction-annealing step of the reduction-annealing, as described above. For the optimization, it is preferable to use an annealing furnace configured to perform annealing in two or more different atmospheres in two or more sections divided in a steel sheet traveling direction.

Preferably, the oxidation treatment is performed in a step of heating the steel sheet that is performed as a step preceding the reduction-annealing. This is because in this case, the oxidation treatment can be performed efficiently at an optimal temperature, which varies depending on the steel components.

Furthermore, it is preferable that the oxidation treatment be performed over a temperature spread of at least 50°C or greater within the range of 500°C or greater and 800°C or less. As referred to herein, the "temperature spread" is a temperature range over which the oxidation treatment is performed, within the range of heating from 500°C to 800°C. For example, in an instance where the oxidation treatment is performed over a temperature range of 550 to 600°C, the temperature spread is 50°C. In an instance where the oxidation treatment is performed over a temperature range of 450 to 600°C, the temperature spread corresponding to the range of 500°C or greater and 800°C or less is 100°C. The reason for using such a temperature spread is to ensure that the oxidation treatment, which is used to obtain an amount of reduced iron necessary for improving coating properties, is performed more uniformly. Although the reason that a uniform oxidation treatment can be achieved by performing the treatment over a temperature spread of 50°C or greater is not clear, it can be assumed that since the oxidation behavior of steel sheets varies depending on the temperature range, starting the oxidation at a relatively low temperature at which an oxidation rate is low results in enhanced uniformity.

Furnaces that can be used for the oxidation zone for performing the oxidation treatment include direct-firing-type furnaces equipped with a direct firing burner (direct firing furnaces (DFF)) and radiant-tube-type furnaces equipped with an atmosphere controlling chamber.

The "direct-firing-type" refers to a technique of performing heating with a burner for heating a steel sheet, by applying a burner flame directly to the surface of the steel sheet; the burner flame is obtained by mixing a fuel, such as coke oven gas (COG), which is a by-product gas from a steelworks, with air and combusting the mixture. The heating with a direct firing burner provides a higher heating rate for the steel sheet than that of a radiant-type heating means and, therefore, has advantages such as being able to shorten the furnace length of the furnace or being able to increase a line speed. In addition, regarding the direct firing burner, in instances where an air ratio of 1.0 or greater is used in at least a portion of the atmosphere in the furnace, to increase the proportion of air with respect to the proportion of fuel, unburned oxygen remains in the flame, and, consequently, the oxidation of the steel sheet can be promoted by the oxygen, to oxidize the surface of the steel sheet. Accordingly, by adjusting the air ratio, the oxygen concentration in the atmosphere can be controlled. Fuels that can be used for the direct firing burner include COGs, liquefied natural gases (LNGs), hydrogen gases, and ammonia gases. Accordingly, in the case of direct-firing-type furnaces, the oxidation furnace will contain $N_2$, which is a component in the air for combustion, and oxidation products of fuel gas components, such as $CO$, $CO_2$, $H_2O$, and $NO_x$, corresponding to the types of fuels used. Accordingly, in this case, the oxidation treatment is performed in an atmosphere containing one or more of $CO$, $CO_2$, $H_2O$, and $NO_x$, in addition to the $O_2$ in an amount of 500 vol-ppm or greater and the $N_2$

The "radiant-tube-type" refers to a technique of heating a steel sheet with radiant heat from a heated tube. In the case of this technique, the heating rate is lower than that of direct firing burners, and, therefore, a longer length of the furnace is necessary; however, this technique provides advantages such as ease of maintenance and inspection.

In the case of both techniques, since it suffices that a sufficient amount of oxidation in the steel sheet be achieved, it suffices that a portion or the whole of the furnace be controlled to have the specified atmosphere. In particular, in the case of the radiant-tube-type furnace, since the heating rate is low, a portion of the interior of the furnace may be covered with a chamber, and only the portion may be controlled to have the specified atmosphere.

In instances where a direct-firing-type furnace is used for the oxidation treatment, it is possible to use a direct firing furnace in which oxidation for the oxidation treatment can be performed with two or more atmospheres in two or more divided sections. The reason is that such a furnace is effective for lowering the level of hydrogen in the interior of the furnace in the subsequent reduction-annealing; the lowering of the level of hydrogen is effective for the formation of the low-dissolved-Si-and-C-concentration layer in the surface layer necessary for LME cracking resistance and for the promotion of dehydrogenation, which affects resistance to delayed fracture.

In this oxidation treatment, if the steel sheet is excessively oxidized, the phenomenon called pickup, in which oxides exfoliate and adhere to rolls, occurs in the subsequent reduction-annealing. The occurrence of pickup on rolls significantly impairs the appearance of the galvanized steel sheet. The pickup tends to occur if the hydrogen concentration for the first reduction-annealing of the subsequent reduction-annealing is 10 vol.% or less. The decrease in the reduction capacity of the atmosphere makes it likely that pickup occurs particularly in the first stage of the reduction-annealing. Regarding the first reduction-annealing of the subsequent reduction-annealing, if the hydrogen concentration is greater than 10 vol.%, the use of two or more divided sections, as mentioned above, is not necessary. Regarding the first reduction-annealing of the subsequent reduction-annealing, if the hydrogen concentration is 10 vol.% or less, the use of two or more divided sections is an important requirement for obtaining an aesthetically pleasing surface appearance free from indentation flaws and the like.

In instances where the oxidation-heating step is performed in a direct firing furnace including two or more divided zones, the heating performed in a first heating zone located upstream is as follows: the cold rolled steel sheet is heated at an average heating rate over a range of 200°C and greater of 10°C/s or greater and 50°C/s or less to a temperature greater than or equal to a reached heating temperature $T_1$ (°C), where $T_1$ is calculated from equation (1) below, in which $\alpha$ is the air ratio in the direct firing furnace. Preferably, $T_1$ is 750°C or less.

$$T_1 = 28.2[Si] + 7.95[Mn] - 86.2\alpha + 666 \qquad (1)$$

In the equation, [Si] is the mass (%) of Si in steel, [Mn] is the mass (%) of Mn in steel, and $\alpha$ is the air ratio in the direct firing furnace.

The reason that equation (1) was formulated will be described below.

To inhibit Si and Mn from being oxidized on the surface of the steel sheet before it is subjected to hot-dip galvanizing, it is important to cause internal oxidation of Si and Mn. In a first stage of the oxidation-heating step, it is desirable to actively perform the oxidation treatment so that iron oxides, which can serve as oxygen supply sources for the internal oxidation of Si and Mn, can be formed.

Obtaining a sufficient amount of iron oxides requires controlling the atmosphere and temperature for the heating. The controlling of the atmosphere is carried out by controlling the air ratio in the direct firing furnace. Increasing the air ratio to increase the proportion of air to fuel allows unreacted oxygen to remain in the flame, and, consequently, the oxidation of the steel sheet can be promoted by the oxygen.

The heating temperature may be varied in accordance with the contents of Si and Mn. It is desirable to oxidize Si and Mn in an inner portion of the steel sheet so as to inhibit Si and Mn from being oxidized on the surface of the steel sheet. The amount of oxygen necessary for the internal oxidation increases with increases in the contents of Si and Mn. Accordingly, as the contents of Si and Mn increase, higher temperatures for the oxidation are desired. In particular, since Si is known to inhibit the oxidation reaction of iron when Si is present in steel, it is desirable to use a higher temperature for the oxidation when the Si content is higher.

Equation (1) was derived by performing multiple regression analysis and using the results of the analysis of a degree of influence of the Si content, the Mn content, and the air ratio in the direct firing furnace on a furnace-exit-side temperature (the reached heating temperature $T_1$).

Thus, in the first heating zone, it is preferable that the steel sheet be heated to a temperature greater than or equal to the reached heating temperature $T_1$ (°C), which is calculated from equation (1) above. Note that the upper limit of the air ratio $\alpha$ during the heating in the first heating zone may be 1.5 or less. This is preferable for inhibiting an excessive oxidation reaction of iron, thereby preventing subsequent occurrence of the pickup phenomenon. In addition, it is preferable that the air ratio $\alpha$ be 0.9 or greater because if the air ratio is low, the oxidizing ability of the atmosphere becomes weak, and a sufficient amount of oxidation may not be achieved even when equation (1) is satisfied.

In the first heating zone, it is desirable that the average heating rate over a range of 200°C and greater be 10 to 50°C/s. If the average heating rate is greater than 50°C/s, the duration of heating in the first heating zone is short, which makes it impossible to form a sufficient amount of iron oxide. On the other hand, if the average heating rate is less than 10°C/s, the heating takes a long time, which decreases production efficiency. In addition, an excessive amount of iron oxide is formed, which can cause the exfoliation of Fe oxides in a reducing atmosphere furnace during the subsequent reduction-annealing, which in turn can lead to the occurrence of a pickup phenomenon. Accordingly, the average heating rate over a range of 200°C and greater is specified to be 10 to 50°C/s. The average heating rate (°C/s) can be determined by dividing the difference between a heating end temperature (the reached maximum temperature of the steel sheet ($T_1$ or greater)) (°C) and a heating start temperature (200°C or greater) by the heating period (s).

The heating performed in a second heating zone located downstream is as follows: the cold rolled steel sheet, after it passes through the first heating zone located upstream, is heated at an average heating rate over a range greater than $T_1$ of 5°C/s or greater and 30°C/s or less to a temperature greater than or equal to $T_2$ (°C), in a direct firing furnace, with an air ratio being $\leq 0.9$, where $T_2$ is calculated from equation (2) below.

$$T_2 = T_1 + 30 \qquad (2)$$

The second heating zone makes it possible to prevent the occurrence of the pickup phenomenon even if the hydrogen concentration in the interior of the furnace is lowered in the subsequent reduction-annealing step and, consequently, to obtain an aesthetically pleasing surface appearance free from indentation flaws and the like.

To prevent the occurrence of the pickup phenomenon, it is important to perform a reduction treatment on a portion of the surface (surface layer) of the steel sheet that has been oxidized. Performing this reduction treatment requires that the air ratio in the burner of the direct firing furnace be controlled to be 0.9 or less. Decreasing the $O_2$ concentration by decreasing the air ratio causes a portion of a surface layer of the iron oxides to be reduced, which leads to the avoidance of direct contact between the rolls of the furnace and iron oxides during the reduction-annealing of the subsequent step, and, consequently, the occurrence of the pickup phenomenon can be prevented. If the air ratio is greater than 0.9, this reduction reaction is less likely to occur, and, therefore, the air ratio is specified to be 0.9 or less. Furthermore, in terms of accomplishing stable combustion in the direct firing furnace, it is preferable that the air ratio be 0.7 or greater.

If the heating temperature for the second heating zone located downstream is lower than $T_2$, which is determined by equation (2), the reduction reaction is less likely to occur, and, consequently, the effect of inhibiting the occurrence of the pickup phenomenon cannot be produced. In terms of eliminating unnecessary heating cost, it is preferable that $T_2$ be 750°C or less.

In the second heating zone, it is desirable that the average heating rate over a range greater than $T_1$ be 5°C/s or greater and 30°C/s or less. If the average heating rate is greater than 30°C/s, the duration of heating in the second heating zone is short, which makes it impossible to cause a reduction reaction for a sufficient amount of iron oxides. On the other hand, if the average heating rate is less than 5°C/s, the heating takes a long time, which decreases production efficiency. The expression "the average heating rate over a range greater than $T_1$" means an average heating rate over a range of greater than $T_1$ to the reached heating temperature of the second heating zone. The average heating rate (°C/s) can be determined by dividing the difference between the heating end temperature (the reached maximum temperature of the steel sheet) (°C) and the heating start temperature by the heating period (s).

Furthermore, as stated above, the oxidation treatment is preferably performed in an atmosphere containing one or more of CO, $CO_2$, $H_2O$, and $NO_x$, in addition to the $O_2$ in an amount of 500 vol-ppm or greater and the $N_2$. Although the reason for this is not clear, one reason is that the inclusion of these gases relatively stabilizes the oxidation treatment of the steel sheet.

In some instances, it is preferable that the oxidation treatment be performed in a radiant tube furnace. Such instances are instances in which an atmosphere-controllable chamber for oxidation treatments is provided in the radiant tube furnace, which provides advantages over direct firing furnaces, such as maintainability and an ability to inhibit variations in a width direction.

Preferably, the reduction-annealing is performed in a radiant tube furnace. Preferably, the reduction-annealing is performed in a radiant tube heating and soaking furnace. The reason for this is that with such a furnace, it is easy to control the interior of the furnace such that a reducing atmosphere is present therein, and in addition, there is a great advantage in terms of equipment cost.

The hot-dip galvanizing is a process in which a hot-dip galvanizing treatment is performed on the annealed steel sheet after the reduction-annealing, in a hot-dip galvanizing bath containing Al in an amount of 0.12 to 0.22 mass%.

In the present invention, the Al concentration in the galvanizing bath is preferably 0.12 to 0.22 mass%. If the Al concentration is less than 0.12 mass%, an Fe-Zn alloy phase is formed during galvanizing, and, consequently, poor coating adhesion and non-uniformity in appearance may result. If the Al concentration is greater than 0.22 mass%, an Fe-Al alloy phase that is formed at an interface between the coating and the steel substrate during galvanizing becomes thick, which results in poor weldability. In addition, the presence of large amounts of Al in the bath may result in the formation of large amounts of Al oxide film on the surface of the galvanized steel sheet, which may impair not only weldability but also appearance properties.

An alloying treatment may be performed after the hot-dip galvanizing. Even in this case, the present invention is effective.

In the instance where an alloying treatment is performed, it is preferable that the galvanizing bath have an Al concentration of 0.12 to 0.17 mass%. If the Al concentration is less than 0.12 mass%, an Fe-Zn alloy phase is formed during galvanizing, and, consequently, poor coating adhesion and non-uniformity in appearance may result. If the Al concentration is greater than 0.17 mass%, an Fe-Al alloy phase that is formed at an interface between the coating and the steel substrate during galvanizing becomes thick and acts as a barrier to an Fe-Zn alloying reaction, which may result in an increased alloying temperature and poor mechanical properties.

Other conditions for the hot-dip galvanizing may be, for example and without limitation, as follows: the temperature of the hot-dip galvanizing bath is in a typical range of 440 to 500°C, the temperature of the steel sheet is 440 to 550°C, the hot-dip galvanizing is performed by immersing the steel sheet in the galvanizing bath, and the coating weight is adjusted by gas wiping or the like.

The alloying treatment is one in which after the hot-dip galvanizing treatment, the steel sheet is heated at a temperature within a range of 450 to 550°C for 10 to 60 seconds.

A degree of alloying (Fe concentration in the coated layer) resulting from the alloying treatment is not particularly limited. Preferably, the degree of alloying in terms of Fe concentration is 7 to 15 mass%. If the degree of alloying is less than 7 mass%, an η phase remains, which results in poor press formability. If the degree of alloying is greater than 15 mass%, poor coating adhesion results.

EXAMPLES

[Example 1]

1.2-mm cold rolled steel sheets each having the chemical composition shown in Table 1 were subjected to annealing and hot-dip galvanizing in a CGL. The oxidation-heating was performed in a direct firing furnace including a nozzle-mix burner, under the conditions shown in Table 2. The oxidation start temperature was 300°C. Since the oxidation start temperature does not particularly affect the coating appearance, the oxidizing atmosphere may be less than 300°C. The reduction-annealing was performed in a radiant tube furnace having two zones separated by seal rolls, under the conditions shown in Table 2. Thereafter, cooling was performed. Subsequently, hot-dip galvanizing was performed with a galvanizing bath containing 0.135 mass% Al and having a temperature of 460°C, and thereafter, the coating weight was adjusted to be approximately 50 g/m$^2$ per side by gas wiping. In some cases, an alloying treatment was performed. Referring to Table 2, during the first reduction-annealing, the steel sheet was held at the reached maximum temperature of the steel sheet for the period shown in the table, and during the second reduction-annealing, the steel sheet was held at the reached maximum temperature of the steel sheet for the period shown in the table.

[Table 1]

| Steel Symbol | C | Si | Mn | P | S | N | Al | B | Ti | Cr | Mo | Cu | Ni | Nb | Sb | V | Ta | W | Zr | Sn | Ca | Mg | REM | |
|---|---|---|---|---|---|---|---|---|---|---|---|---|---|---|---|---|---|---|---|---|---|---|---|---|
| A | 0.18 | 0.41 | 1.53 | 0.01 | 0.002 | 0.004 | 0.038 | 0.001 | 0.01 | - | - | - | - | - | - | - | - | - | - | - | - | - | - | Reference Example |
| B | 0.11 | 0.45 | 2.52 | 0.02 | 0.001 | 0.003 | 0.032 | 0.001 | 0.01 | 0.59 | - | - | - | 0.04 | - | - | - | - | - | - | - | - | - | Example |
| C | 0.09 | 0.62 | 2.72 | 0.01 | 0.002 | 0.005 | 0.035 | 0.001 | 0.01 | - | - | - | - | 0.02 | - | - | - | - | - | - | - | - | - | Example |
| D | 0.15 | 0.93 | 2.13 | 0.03 | 0.002 | 0.004 | 0.034 | - | - | - | - | - | - | - | - | - | - | - | - | - | - | - | - | Example |
| E | 0.18 | 1.03 | 3.09 | 0.01 | 0.002 | 0.006 | 0.037 | 0.001 | 0.01 | - | - | - | - | 0.01 | 0.007 | - | - | - | - | - | - | - | - | Example |
| F | 0.12 | 1.18 | 1.86 | 0.02 | 0.001 | 0.004 | 0.031 | 0.001 | 0.01 | - | - | - | - | 0.01 | 0.012 | - | - | - | - | - | - | - | - | Example |
| G | 0.24 | 1.42 | 1.29 | 0.01 | 0.001 | 0.003 | 0.033 | 0.001 | 0.01 | - | - | - | - | - | - | - | - | - | - | - | - | - | - | Example |
| H | 0.13 | 1.38 | 1.97 | 0.02 | 0.001 | 0.007 | 0.034 | 0.001 | 0.01 | - | - | - | - | - | - | - | - | - | - | - | - | - | - | Example |
| I | 0.12 | 1.45 | 1.54 | 0.01 | 0.001 | 0.003 | 0.037 | 0.001 | 0.01 | - | - | - | - | - | - | - | - | - | - | - | - | - | - | Example |
| J | 0.17 | 1.50 | 2.33 | 0.02 | 0.001 | 0.004 | 0.035 | - | - | - | 0.11 | - | - | - | - | - | - | - | - | - | - | - | - | Example |
| K | 0.19 | 1.53 | 2.74 | 0.03 | 0.001 | 0.004 | 0.038 | 0.001 | 0.01 | - | - | 0.12 | - | - | - | - | - | - | - | - | - | - | - | Example |
| L | 0.15 | 1.62 | 1.31 | 0.01 | 0.002 | 0.005 | 0.034 | 0.001 | 0.01 | - | - | - | 0.14 | - | - | - | - | - | - | - | - | - | - | Example |
| M | 0.17 | 1.65 | 2.52 | 0.01 | 0.002 | 0.004 | 0.035 | 0.001 | 0.01 | - | - | - | - | - | - | - | - | - | - | - | - | - | - | Example |
| N | 0.12 | 0.46 | 2.59 | 0.03 | 0.002 | 0.004 | 0.032 | 0.002 | 0.07 | - | 0.60 | 0.55 | 0.40 | 0.03 | 0.040 | 0.09 | 0.06 | 0.19 | 0.05 | - | - | - | - | Invention Example |
| O | 0.18 | 1.49 | 2.73 | 0.02 | 0.001 | 0.005 | 0.700 | 0.003 | 0.02 | - | - | - | - | 0.10 | 0.080 | - | - | - | - | 0.06 | 0.003 | 0.002 | 0.003 | Invention Example |

[Table 2]

| No. | Steel Type | Oxidation Treatment | | Reduction-Annealing | | | | | | | | Hot-Dip Galvanizing | Alloying Treatment | Classification |
| | | | | First Reduction-Annealing | | | | Second Reduction-Annealing | | | | | | |
| | | Reached Maximum Temperature of Steel Sheet (°C) | O$_2$ Concentration (vol-ppm) | Reached Maximum Temperature of Steel Sheet (°C) | Period (s) | Dew Point (°C) | H$_2$ Concentration (vol.%) | Reached Maximum Temperature of Steel Sheet (°C) | Period (s) | Dew Point (°C) | H$_2$ Concentration (vol.%) | | | |
|---|---|---|---|---|---|---|---|---|---|---|---|---|---|---|
| 1 | K | 820 | 1500 | 800 | 50 | 10 | 15 | 820 | 150 | 10 | 5 | Yes | Yes | Comparative Example |
| 2 | K | 480 | 1500 | 800 | 50 | 10 | 15 | 820 | 150 | 10 | 5 | Yes | Yes | Comparative Example |
| 3 | K | 680 | 400 | 800 | 50 | 10 | 15 | 820 | 150 | 10 | 5 | Yes | Yes | Comparative Example |
| 4 | K | 780 | 1500 | 920 | 50 | 10 | 15 | 880 | 150 | 10 | 5 | Yes | Yes | Comparative Example |
| 5 | K | 680 | 1500 | 640 | 50 | 10 | 15 | 770 | 150 | 10 | 5 | Yes | Yes | Comparative Example |
| 6 | K | 680 | 1500 | 800 | 15 | 10 | 15 | 820 | 150 | 10 | 5 | Yes | Yes | Comparative Example |
| 7 | K | 680 | 1500 | 800 | 50 | 25 | 15 | 820 | 150 | 10 | 5 | Yes | Yes | Comparative Example |
| 8 | K | 680 | 1500 | 800 | 50 | 10 | 26 | 820 | 150 | 10 | 5 | Yes | Yes | Comparative Example |
| 9 | K | 680 | 1500 | 800 | 50 | 10 | 4 | 820 | 150 | 10 | 5 | Yes | Yes | Comparative Example |
| 10 | K | 680 | 1500 | 880 | 50 | 10 | 15 | 960 | 150 | 10 | 5 | Yes | Yes | Comparative Example |
| 11 | K | 680 | 1500 | 720 | 50 | 10 | 15 | 690 | 150 | 10 | 5 | Yes | Yes | Comparative Example |
| 12 | K | 680 | 1500 | 800 | 50 | 10 | 15 | 820 | 29 | 10 | 5 | Yes | Yes | Comparative Example |
| 13 | K | 680 | 1500 | 800 | 50 | 10 | 15 | 820 | 150 | 25 | 5 | Yes | Yes | Comparative Example |

| No. | Steel Type | Oxidation Treatment | | Reduction-Annealing | | | | | | | | | Hot-Dip Galvanizing | Alloying Treatment | Classification |
|---|---|---|---|---|---|---|---|---|---|---|---|---|---|---|---|
| | | | | First Reduction-Annealing | | | | Second Reduction-Annealing | | | | | | | |
| | | Reached Maximum Temperature of Steel Sheet (°C) | $O_2$ Concentration (vol-ppm) | Reached Maximum Temperature of Steel Sheet (°C) | Period (s) | Dew Point (°C) | $H_2$ Concentration (vol.%) | Reached Maximum Temperature of Steel Sheet (°C) | Period (s) | Dew Point (°C) | $H_2$ Concentration (vol.%) | | | | |
| 14 | K | 680 | 1500 | 800 | 50 | 10 | 15 | 820 | 150 | -15 | 5 | | Yes | Yes | Comparative Example |
| 15 | K | 680 | 1500 | 800 | 50 | 10 | 15 | 820 | 150 | 10 | 9 | | Yes | Yes | Comparative Example |
| 16 | K | 680 | 1500 | 800 | 50 | 10 | 15 | 820 | 150 | 10 | 1 | | Yes | Yes | Comparative Example |
| 17 | K | 680 | 1500 | 800 | 50 | 10 | 15 | 820 | 150 | 10 | 5 | | Yes | Yes | Invention Example |
| 18 | K | 800 | 1500 | 800 | 50 | 10 | 15 | 820 | 150 | 10 | 5 | | Yes | Yes | Invention Example |
| 19 | K | 750 | 1500 | 800 | 50 | 10 | 15 | 820 | 150 | 10 | 5 | | Yes | Yes | Invention Example |
| 20 | K | 600 | 1500 | 800 | 50 | 10 | 15 | 820 | 150 | 10 | 5 | | Yes | Yes | Invention Example |
| 21 | K | 520 | 1500 | 800 | 50 | 10 | 15 | 820 | 150 | 10 | 5 | | Yes | Yes | Invention Example |
| 22 | K | 680 | 3000 | 800 | 50 | 10 | 15 | 820 | 150 | 10 | 5 | | Yes | Yes | Invention Example |
| 23 | K | 680 | 2000 | 800 | 50 | 10 | 15 | 820 | 150 | 10 | 5 | | Yes | Yes | Invention Example |
| 24 | K | 680 | 1000 | 800 | 50 | 10 | 15 | 820 | 150 | 10 | 5 | | Yes | Yes | Invention Example |
| 25 | K | 680 | 500 | 800 | 50 | 10 | 15 | 820 | 150 | 10 | 5 | | Yes | Yes | Invention Example |
| 26 | K | 680 | 1500 | 880 | 50 | 10 | 15 | 940 | 150 | 10 | 5 | | Yes | Yes | Invention Example |

EP 4 663 783 A1

(continued)

| No. | Steel Type | Oxidation Treatment | | Reduction-Annealing | | | | | | | | Hot-Dip Galvanizing | Alloying Treatment | Classification |
|---|---|---|---|---|---|---|---|---|---|---|---|---|---|---|
| | | | | First Reduction-Annealing | | | | Second Reduction-Annealing | | | | | | |
| | | Reached Maximum Temperature of Steel Sheet (°C) | O$_2$ Concentration (vol-ppm) | Reached Maximum Temperature of Steel Sheet (°C) | Period (s) | Dew Point (°C) | H$_2$ Concentration (vol.%) | Reached Maximum Temperature of Steel Sheet (°C) | Period (s) | Dew Point (°C) | H$_2$ Concentration (vol.%) | | | |
| 27 | K | 680 | 1500 | 850 | 50 | 10 | 15 | 880 | 150 | 10 | 5 | Yes | Yes | Invention Example |
| 28 | K | 680 | 1500 | 750 | 50 | 10 | 15 | 780 | 150 | 10 | 5 | Yes | Yes | Invention Example |
| 29 | K | 680 | 1500 | 660 | 50 | 10 | 15 | 710 | 150 | 10 | 5 | Yes | Yes | Invention Example |
| 30 | K | 680 | 1500 | 800 | 150 | 10 | 15 | 820 | 150 | 10 | 5 | Yes | Yes | Invention Example |
| 31 | K | 680 | 1500 | 800 | 100 | 10 | 15 | 820 | 150 | 10 | 5 | Yes | Yes | Invention Example |
| 32 | K | 680 | 1500 | 800 | 20 | 10 | 15 | 820 | 150 | 10 | 5 | Yes | Yes | Invention Example |
| 33 | K | 680 | 1500 | 800 | 50 | 20 | 15 | 820 | 150 | 10 | 5 | Yes | Yes | Invention Example |
| 34 | K | 680 | 1500 | 800 | 50 | 0 | 15 | 820 | 150 | 10 | 5 | Yes | Yes | Invention Example |
| 35 | K | 680 | 1500 | 800 | 50 | -15 | 15 | 820 | 150 | 10 | 5 | Yes | Yes | Invention Example |
| 36 | K | 680 | 1500 | 800 | 50 | -30 | 15 | 820 | 150 | 10 | 5 | Yes | Yes | Invention Example |
| 37 | K | 680 | 1500 | 800 | 50 | -45 | 15 | 820 | 150 | 10 | 5 | Yes | Yes | Invention Example |
| 38 | K | 680 | 1500 | 800 | 50 | 10 | 25 | 820 | 150 | 10 | 5 | Yes | Yes | Invention Example |
| 39 | K | 680 | 1500 | 800 | 50 | 10 | 20 | 820 | 150 | 10 | 5 | Yes | Yes | Invention Example |

| No. | Steel Type | Oxidation Treatment | | Reduction-Annealing | | | | | | | | | Hot-Dip Galvanizing | Alloying Treatment | Classification |
| | | | | First Reduction-Annealing | | | | Second Reduction-Annealing | | | | | | | |
| | | Reached Maximum Temperature of Steel Sheet (°C) | $O_2$ Concentration (vol-ppm) | Reached Maximum Temperature of Steel Sheet (°C) | Period (s) | Dew Point (°C) | $H_2$ Concentration (vol.%) | Reached Maximum Temperature of Steel Sheet (°C) | Period (s) | Dew Point (°C) | $H_2$ Concentration (vol.%) | | | | |
| 40 | K | 680 | 1500 | 800 | 50 | 10 | 10 | 820 | 150 | 10 | 5 | | Yes | Yes | Invention Example |
| 41 | K | 680 | 1500 | 800 | 50 | 10 | 8 | 820 | 150 | 10 | 5 | | Yes | Yes | Invention Example |
| 42 | K | 680 | 1500 | 800 | 50 | 10 | 5.2 | 820 | 150 | 10 | 4.8 | | Yes | Yes | Invention Example |
| 43 | K | 680 | 1500 | 800 | 50 | 10 | 15 | 820 | 300 | 10 | 5 | | Yes | Yes | Invention Example |
| 44 | K | 680 | 1500 | 800 | 50 | 10 | 15 | 820 | 200 | 10 | 5 | | Yes | Yes | Invention Example |
| 45 | K | 680 | 1500 | 800 | 50 | 10 | 15 | 820 | 50 | 10 | 5 | | Yes | Yes | Invention Example |
| 46 | K | 680 | 1500 | 800 | 50 | 10 | 15 | 820 | 150 | 20 | 5 | | Yes | Yes | Invention Example |
| 47 | K | 680 | 1500 | 800 | 50 | 10 | 15 | 820 | 150 | 0 | 5 | | Yes | Yes | Invention Example |
| 48 | K | 680 | 1500 | 800 | 50 | 10 | 15 | 820 | 150 | -10 | 5 | | Yes | Yes | Invention Example |
| 49 | K | 680 | 1500 | 800 | 50 | 10 | 15 | 820 | 150 | 10 | 8 | | Yes | Yes | Invention Example |
| 50 | K | 680 | 1500 | 800 | 50 | 10 | 15 | 820 | 150 | 10 | 2 | | Yes | Yes | Invention Example |
| 51 | K | 680 | 1500 | 800 | 50 | 10 | 15 | 820 | 150 | 10 | 5 | | Yes | No | Invention Example |
| 52 | B | 680 | 1500 | 800 | 50 | 10 | 15 | 820 | 150 | 10 | 5 | | Yes | Yes | Invention Example |

| No. | Steel Type | Oxidation Treatment | | Reduction-Annealing | | | | | | | | | Hot-Dip Galvanizing | Alloying Treatment | Classification |
| | | Reached Maximum Temperature of Steel Sheet (°C) | $O_2$ Concentration (vol-ppm) | First Reduction-Annealing | | | | Second Reduction-Annealing | | | | | | | |
| | | | | Reached Maximum Temperature of Steel Sheet (°C) | Period (s) | Dew Point (°C) | $H_2$ Concentration (vol.%) | Reached Maximum Temperature of Steel Sheet (°C) | Period (s) | Dew Point (°C) | $H_2$ Concentration (vol.%) | | | | | |
|---|---|---|---|---|---|---|---|---|---|---|---|---|---|---|---|
| 53 | C | 680 | 1500 | 800 | 50 | 10 | 15 | 820 | 150 | 10 | 5 | | Yes | Yes | Invention Example |
| 54 | D | 680 | 1500 | 800 | 50 | 10 | 15 | 820 | 150 | 10 | 5 | | Yes | Yes | Invention Example |
| 55 | E | 680 | 1500 | 800 | 50 | 10 | 15 | 820 | 150 | 10 | 5 | | Yes | Yes | Invention Example |
| 56 | F | 680 | 1500 | 800 | 50 | 10 | 15 | 820 | 150 | 10 | 5 | | Yes | Yes | Invention Example |
| 57 | G | 680 | 1500 | 800 | 50 | 10 | 15 | 820 | 150 | 10 | 5 | | Yes | Yes | Invention Example |
| 58 | H | 680 | 1500 | 800 | 50 | 10 | 15 | 820 | 150 | 10 | 5 | | Yes | Yes | Invention Example |
| 59 | I | 680 | 1500 | 800 | 50 | 10 | 15 | 820 | 150 | 10 | 5 | | Yes | Yes | Invention Example |
| 60 | J | 680 | 1500 | 800 | 50 | 10 | 15 | 820 | 150 | 10 | 5 | | Yes | Yes | Invention Example |
| 61 | L | 680 | 1500 | 800 | 50 | 10 | 15 | 820 | 150 | 10 | 5 | | Yes | Yes | Invention Example |
| 62 | M | 680 | 1500 | 800 | 50 | 10 | 15 | 820 | 150 | 10 | 5 | | Yes | Yes | Invention Example |
| 63 | A | 680 | 1500 | 800 | 50 | 10 | 15 | 820 | 150 | 10 | 5 | | Yes | Yes | Reference Example |
| 64 | N | 680 | 1500 | 800 | 50 | 10 | 15 | 820 | 150 | 10 | 5 | | Yes | Yes | Invention Example |
| 65 | O | 680 | 1500 | 800 | 50 | 10 | 15 | 820 | 150 | 10 | 5 | | Yes | Yes | Invention Example |

Subsequently, the high-strength hot-dip galvanized steel sheets, obtained as described above, were evaluated for appearance properties and investigated for tensile properties. In addition, LME cracking resistance, dehydrogenation behavior, and damage to the furnace body were evaluated. The methods for the measurement and the evaluation are described below.

<Appearance Properties>

The appearance of the steel sheets was visually observed. When there were no appearance defects, such as coating bare spots, indentation flaws due to a pickup phenomenon, or non-uniformly alloyed regions, a rating of "◎" was given; when there were slight appearance defects, but the steel sheet was acceptable as a product, a rating of "o" was given; and when there were obvious uneven alloying, coating bare spots, or indentation flaws, a rating of "×" was given. When the rating was "o" or "◎", it was determined that a good appearance was achieved.

<Tensile Properties>

A test in accordance with JIS Z 2241 was conducted with a JIS No. 5 test specimen, with a tensile direction being a rolling direction.

<LME Cracking Resistance>

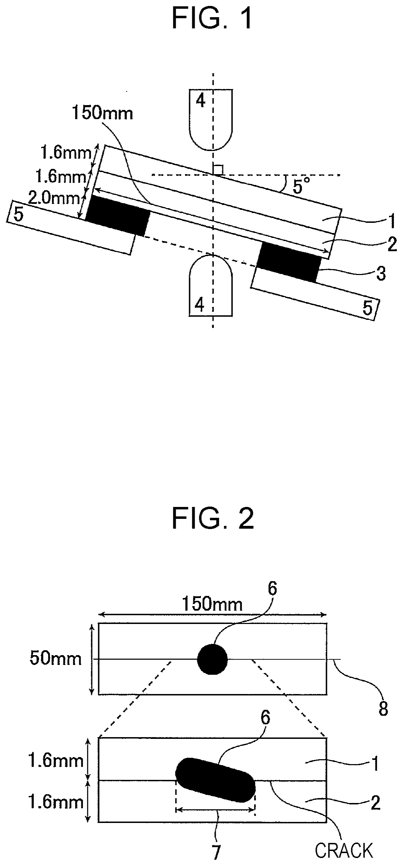

A test specimen with dimensions of 150 mm (longitudinal direction) × 50 mm (lateral direction) was cut from each of the hot-dip galvanized steel sheets, where the longitudinal direction was a direction (TD) perpendicular to the rolling direction, and the lateral direction was the rolling direction. Another piece having the same size was cut from a test hot-dip galvanized steel sheet (sheet thickness: 1.2 mm, TS: 980 MPa class), which had a hot-dip galvanized layer with a coating weight per side of 50 g/m$^2$. The test specimen and the other piece were combined in an overlapping manner to form a sheet combination. This sheet combination was assembled such that the hot-dip galvanized layer of the test specimen was in contact with the hot-dip galvanized layer side of the commercial hot-dip galvanized steel sheet. As illustrated in Fig. 1, the sheet combination was fixed to a stand via a spacer having a thickness of 2.0 mm, in a state in which the sheet combination was inclined at 5°, which is a maximum inclination that is expected to occur in some configurations of parts. The spacer was a pair of steel sheets with dimensions of 50 mm (longitudinal direction) × 45 mm (lateral direction) × 2.0 mm (thickness) and was placed such that an end surface of each of the pair of steel sheets in the longitudinal direction was flush with both end surfaces of the sheet combination in the lateral direction. Accordingly, the distance between the pair of steel sheets that constitute the spacer was 60 mm. The stand was a plate having a hole in a middle portion.

Next, resistance welding was performed on the sheet combination with a servomotor-actuated welding machine that operated on a single phase alternating current (50 Hz), while the sheet combination was pressed with a pair of electrodes (tip diameter: 6 mm) and was in a state of being bent; the conditions included an electrode force of 3.5 kN, a hold time of 0.10 seconds or 0.16 seconds, and a welding current and a welding time that enabled a nugget diameter of 5.9 mm of a weld to be achieved (that is, the welding current and the welding time were suitably adjusted for each of the sheet combinations in a manner such that a nugget diameter of 5.9 mm could be achieved). In this manner, sheet combinations including a weld were prepared. In this instance, the pair of electrodes pressed the sheet combination from above and below in a vertical direction, with the lower electrode pressing the test specimen through the hole of the stand. For the pressing, the lower electrode of the pair of electrodes and the stand were fixed in a manner such that the lower electrode was in contact with a plane corresponding to an extension from a surface at which the spacer was in contact with the stand; and, the upper electrode was adapted to be movable. Furthermore, the upper electrode was adapted to come into contact with a middle portion of the test hot-dip galvanized steel sheet.

The "hold time" is a period from when the flow of the welding current is stopped to when the electrodes begin to be removed. The "nugget diameter" is the distance between end portions 10 of the nugget in the longitudinal direction of the sheet combination, as illustrated in Fig. 2.

Next, as illustrated in Fig. 2, the sheet combinations including a weld were each cut such that the cut portion contained the weld (nugget), and the cross section of the weld was observed with an optical microscope (200× magnification). The resistance to resistance-welding cracking at the weld was evaluated according to the following criteria. In Fig. 2, the upper diagram is a plan view of the sheet combination including a weld and illustrates the cut position. In Fig. 2, the lower diagram illustrates the cross section in a thickness direction of the sheet combination that has been cut and schematically illustrates a crack formed in the test specimen. If cracking occurs in the test hot-dip galvanized steel sheet, the stress is dispersed in the test specimen, and, therefore, proper evaluation cannot be performed. Accordingly, data of cases in which cracking did not occur in the test hot-dip galvanized steel sheet were employed as data of Examples.

In instances where a rating of "o" was given, and a rating of "◎" was given, as described below, it was determined that the resistance to resistance-welding cracking at the weld was good and excellent, respectively. In instances where a rating of "×" was given, it was determined that the resistance to resistance-welding cracking at the weld was poor.

◎: With a hold time of 0.10 seconds, no cracks with a length of 0.1 mm or greater were observed.
○: With a hold time of 0.10 seconds, a crack with a length of 0.1 mm or greater was observed, but with a hold time of 0.16 seconds, no cracks with a length of 0.1 mm or greater were observed.
×: With a hold time of 0.16 seconds, a crack with a length of 0.1 mm or greater was observed.

<Dehydrogenation Behavior>

A strip-shaped test specimen with a long axis length of 30 mm and a short axis length of 5 mm was cut from a widthwise middle portion of each of the hot-dip galvanized steel sheets, and the coated layer of the test specimen was removed with a Leutor. Immediately thereafter, hydrogen analysis was performed with a thermal desorption spectrometer under the conditions of an analysis start temperature of 25°C, an analysis end temperature of 300°C, and a heating rate of 200°C/hour. A hydrogen release amount (mass-ppm/min), which is an amount of hydrogen released from a surface of the test specimen, was measured at various temperatures. An amount of diffusible hydrogen in steel was calculated as the sum of the hydrogen release amounts over the range of the analysis start temperature to 300°C. When the amount of diffusible hydrogen in steel was 0.01 mass-ppm or less, a rating of "◎++" (best) was given; when the amount was 0.06 mass-ppm or less, a rating of "◎+" (very good) was given; when the amount was 0.10 mass-ppm or less, a rating of "◎" (good) was given; and when the amount was 0.30 mass-ppm or less, a rating of "o" (pass) was given. Furthermore, it is experimentally known that when the amount of diffusible hydrogen in steel is greater than 0.30 mass-ppm, the resistance to delayed fracture of the steel sheet decreases in many cases. Accordingly, when the amount was 0.30 mass-ppm or greater, a rating of "×" was given. It was determined that in the case of "◎" or "o", dehydrogenation behavior was excellent.

<Damage to Furnace Body>

Damage to the furnace body was evaluated by visually inspecting whether discoloration was present on a steel shell (SUS 310S) in the annealing furnace. In instances where no discoloration was observed on the steel shell, a rating of "o" was given, and a determination was made that there was no damage to the furnace body. In instances where obvious discoloration was observed, a rating of "×" was given, and a determination was made that there was damage to the furnace body. The results obtained as described above are shown, together with the manufacturing conditions, in Table 3.

[Table 3]

| No. | Coating Appearance | TS (MPa) | LME Cracking Resistance | Amount of Diffusible Hydrogen in Steel Sheet | | Damage to Furnace Body | Classification |
|---|---|---|---|---|---|---|---|
| | | | | (mass-ppm) | Rating | | |
| 1 | × | 1299 | ○ | 0.14 | ○ | ○ | Comparative Example |
| 2 | × | 1308 | ○ | 0.13 | ○ | × | Comparative Example |
| 3 | × | 1296 | ○ | 0.15 | ○ | ○ | Comparative Example |
| 4 | ◎ | 1289 | ◎ | 0.12 | ○ | ○ | Comparative Example |
| 5 | ◎ | 1399 | × | 0.16 | ○ | × | Comparative Example |
| 6 | × | 1301 | ○ | 0.09 | ◎ | ○ | Comparative Example |
| 7 | × | 1295 | ○ | 0.14 | ○ | ○ | Comparative Example |
| 8 | ◎ | 1296 | ○ | 0.31 | × | × | Comparative Example |
| 9 | × | 1285 | ◎ | 0.05 | ◎+ | ○ | Comparative Example |
| 10 | ◎ | 1306 | ◎ | 0.13 | ○ | ○ | Comparative Example |
| 11 | ◎ | 1295 | × | 0.12 | ○ | × | Comparative Example |
| 12 | ◎ | 1305 | × | 0.21 | ○ | ○ | Comparative Example |
| 13 | ◎ | 1303 | ◎ | 0.07 | ◎ | ○ | Comparative Example |
| 14 | ◎ | 1298 | × | 0.22 | ○ | × | Comparative Example |

(continued)

| No. | Coating Appearance | TS (MPa) | LME Cracking Resistance | Amount of Diffusible Hydrogen in Steel Sheet (mass-ppm) | Rating | Damage to Furnace Body | Classification |
|---|---|---|---|---|---|---|---|
| 15 | ◎ | 1303 | × | 0.28 | ○ | ○ | Comparative Example |
| 16 | ◎ | 1311 | ◎ | 0.05 | ◎+ | ○ | Comparative Example |
| 17 | ◎ | 1309 | ○ | 0.15 | ○ | ○ | Invention Example |
| 18 | ◎ | 1289 | ○ | 0.14 | ○ | ○ | Invention Example |
| 19 | ◎ | 1304 | ○ | 0.16 | ○ | ○ | Invention Example |
| 20 | ◎ | 1298 | ○ | 0.18 | ○ | ○ | Invention Example |
| 21 | ○ | 1305 | ○ | 0.14 | ○ | ○ | Invention Example |
| 22 | ◎ | 1303 | ○ | 0.13 | ○ | ○ | Invention Example |
| 23 | ◎ | 1307 | ○ | 0.12 | ○ | ○ | Invention Example |
| 24 | ◎ | 1296 | ○ | 0.15 | ○ | ○ | Invention Example |
| 25 | ◎ | 1299 | ○ | 0.14 | ○ | ○ | Invention Example |
| 26 | ◎ | 1362 | ◎ | 0.16 | ○ | ○ | Invention Example |
| 27 | ◎ | 1311 | ◎ | 0.17 | ○ | ○ | Invention Example |
| 28 | ◎ | 1312 | ○ | 0.18 | ○ | ○ | Invention Example |
| 29 | ◎ | 1346 | ○ | 0.14 | ○ | ○ | Invention Example |
| 30 | ◎ | 1302 | ○ | 0.26 | ○ | ○ | Invention Example |
| 31 | ◎ | 1303 | ○ | 0.21 | ○ | ○ | Invention Example |
| 32 | ◎ | 1299 | ○ | 0.13 | ○ | ○ | Invention Example |
| 33 | ◎ | 1293 | ◎ | 0.16 | ○ | ○ | Invention Example |
| 34 | ◎ | 1311 | ○ | 0.14 | ○ | ○ | Invention Example |
| 35 | ◎ | 1292 | ○ | 0.16 | ○ | ○ | Invention Example |
| 36 | ◎ | 1311 | ○ | 0.13 | ○ | ○ | Invention Example |
| 37 | ◎ | 1296 | ○ | 0.15 | ○ | ○ | Invention Example |
| 38 | ◎ | 1309 | ○ | 0.28 | ○ | ○ | Invention Example |
| 39 | ◎ | 1302 | ○ | 0.26 | ○ | ○ | Invention Example |
| 40 | ○ | 1311 | ○ | 0.12 | ○ | ○ | Invention Example |
| 41 | ○ | 1303 | ◎ | 0.08 | ◎ | ○ | Invention Example |
| 42 | ○ | 1296 | ◎ | 0.05 | ◎+ | ○ | Invention Example |
| 43 | ◎ | 1299 | ◎ | 0.09 | ◎ | ○ | Invention Example |
| 44 | ◎ | 1288 | ○ | 0.11 | ○ | ○ | Invention Example |
| 45 | ◎ | 1301 | ○ | 0.15 | ○ | ○ | Invention Example |
| 46 | ◎ | 1296 | ◎ | 0.08 | ◎ | ○ | Invention Example |
| 47 | ◎ | 1299 | ○ | 0.16 | ○ | ○ | Invention Example |
| 48 | ◎ | 1303 | ○ | 0.19 | ○ | ○ | Invention Example |
| 49 | ◎ | 1307 | ○ | 0.23 | ○ | ○ | Invention Example |
| 50 | ◎ | 1302 | ◎ | 0.06 | ◎+ | ○ | Invention Example |
| 51 | ◎ | 1297 | ○ | 0.21 | ○ | ○ | Invention Example |

(continued)

| No. | Coating Appearance | TS (MPa) | LME Cracking Resistance | Amount of Diffusible Hydrogen in Steel Sheet | | Damage to Furnace Body | Classification |
|---|---|---|---|---|---|---|---|
| | | | | (mass-ppm) | Rating | | |
| 52 | ◎ | 1219 | ○ | 0.15 | ○ | ○ | Invention Example |
| 53 | ◎ | 1012 | ○ | 0.14 | ○ | ○ | Invention Example |
| 54 | ◎ | 949 | ○ | 0.16 | ○ | ○ | Invention Example |
| 55 | ◎ | 1423 | ○ | 0.15 | ○ | ○ | Invention Example |
| 56 | ◎ | 751 | ○ | 0.17 | ○ | ○ | Invention Example |
| 57 | ◎ | 805 | ○ | 0.16 | ○ | ○ | Invention Example |
| 58 | ◎ | 809 | ○ | 0.14 | ○ | ○ | Invention Example |
| 59 | ◎ | 609 | ○ | 0.13 | ○ | ○ | Invention Example |
| 60 | ◎ | 1039 | ○ | 0.15 | ○ | ○ | Invention Example |
| 61 | ◎ | 785 | ○ | 0.12 | ○ | ○ | Invention Example |
| 62 | ◎ | 1198 | ○ | 0.16 | ○ | ○ | Invention Example |
| 63 | ◎ | 1026 | ○ | 0.13 | ○ | ○ | Reference Example |
| 64 | ◎ | 1198 | ○ | 0.15 | ○ | ○ | |
| 65 | ◎ | 1280 | ○ | 0.20 | ○ | ○ | |

As indicated by Table 3, despite the fact that the high-strength hot-dip galvanized steel sheets of Invention Examples contained Si, the steel sheets had excellent LME cracking resistance, had a good coating appearance, had a low amount of diffusible hydrogen in the steel sheet, could be expected to exhibit good resistance to delayed fracture, and did not do much damage to the furnace body. In contrast, in Comparative Examples, the steel sheets were manufactured outside the scope of the present invention, and the steel sheets exhibited poor properties in at least one of LME cracking resistance, coating appearance, the amount of diffusible hydrogen in the steel sheet, and damage to the furnace body.

[Example 2]

In a similar manner, 1.2-mm cold rolled steel sheets each having the chemical composition shown in Table 1 were subjected to annealing and hot-dip galvanizing in a CGL. The oxidation-heating was performed in a direct firing furnace including a nozzle-mix burner and having two separated zones, under the conditions shown in Table 4. The reduction-annealing was performed in a radiant tube furnace having two zones separated by seal rolls, under the conditions shown in Table 4. Thereafter, cooling was performed. Subsequently, hot-dip galvanizing was performed with a bath containing 0.135% Al and having a temperature of 460°C, and thereafter, the coating weight was adjusted to be approximately 50 g/m$^2$ by gas wiping. In some cases, an alloying treatment was performed. Referring to Table 4, during the first reduction-annealing, the steel sheet was held at the reached maximum temperature of the steel sheet for the period shown in the table, and during the second reduction-annealing, the steel sheet was held at the reached maximum temperature of the steel sheet for the period shown in the table.

Subsequently, the high-strength hot-dip galvanized steel sheets, obtained as described above, were evaluated for appearance properties and investigated for tensile properties in a manner similar to that of Example 1. In addition, LME cracking resistance, dehydrogenation behavior, and damage to the furnace body were evaluated.

[Table 4]

| No. | Steel Type | Oxidation Treatment | | | | | | | | | | Reduction-Annealing | | | | | | | | Hot-Dip Galvanizing | Alloying Treatment | Classification |
|---|---|---|---|---|---|---|---|---|---|---|---|---|---|---|---|---|---|---|---|---|---|---|
| | | First Stage-First Heating | | | | | Second Stage-Second Heating | | | | | First Reduction-Annealing | | | | Second Reduction-Annealing | | | | | | |
| | | Average Heating Rate Over Range of 200°C and Greater | T1 | Reached Maximum Temperature of Steel Sheet | O2 Concentration | Air Ratio | Average Heating Rate Over Range Greater Than T1 | T2 | Reached Maximum Temperature of Steel Sheet | O2 Concentration | Air Ratio | Reached Maximum Temperature of Steel Sheet | Period | Dew Point | H2 Concentration | Reached Maximum Temperature of Steel Sheet | Period | Dew Point | H2 Concentration | | | |
| | | (°C/s) | (°C) | (°C) | (vol-ppm) | | (°C/s) | (°C) | (°C) | (vol-ppm) | | (°C) | (s) | (°C) | (vol.%) | (°C) | (s) | (°C) | (vol.%) | | | |
| 1 | K | 55 | 636.1 | 640 | 2000 | 1.10 | 10 | 666.1 | 680 | 20 | 0.85 | 800 | 50 | 10 | 5.3 | 820 | 150 | 10 | 4.6 | Yes | Yes | Invention Example |
| 2 | K | 20 | 640.4 | 630 | 1000 | 1.05 | 10 | 670.4 | 680 | 20 | 0.85 | 800 | 50 | 10 | 5.2 | 820 | 150 | 10 | 4.7 | Yes | Yes | Invention Example |
| 3 | K | 20 | 636.1 | 630 | 2000 | 1.10 | 10 | 666.1 | 680 | 20 | 0.85 | 800 | 50 | 10 | 5.1 | 820 | 150 | 10 | 4.7 | Yes | Yes | Invention Example |
| 4 | K | 20 | 627.5 | 620 | 3000 | 1.20 | 10 | 657.5 | 680 | 20 | 0.85 | 800 | 50 | 10 | 5.4 | 820 | 150 | 10 | 4.6 | Yes | Yes | Invention Example |
| 5 | K | 20 | 636.1 | 640 | 2000 | 1.10 | 35 | 666.1 | 680 | 20 | 0.85 | 800 | 50 | 10 | 5.1 | 820 | 150 | 10 | 4.6 | Yes | Yes | Invention Example |
| 6 | K | 20 | 636.1 | 640 | 2000 | 1.10 | 3 | 666.1 | 680 | 20 | 0.85 | 800 | 50 | 10 | 5.0 | 820 | 150 | 10 | 4.7 | Yes | Yes | Invention Example |
| 7 | K | 20 | 636.1 | 640 | 2000 | 1.10 | 10 | 666.1 | 660 | 20 | 0.85 | 800 | 50 | 10 | 5.4 | 820 | 150 | 10 | 4.7 | Yes | Yes | Invention Example |
| 8 | K | 20 | 636.1 | 640 | 2000 | 1.10 | 10 | 666.1 | 680 | 115 | 0.95 | 800 | 50 | 10 | 5.3 | 820 | 150 | 10 | 4.5 | Yes | Yes | Invention Example |
| 9 | K | 50 | 636.1 | 640 | 2000 | 1.10 | 10 | 666.1 | 680 | 20 | 0.85 | 800 | 50 | 10 | 5.2 | 820 | 150 | 10 | 4.6 | Yes | Yes | Invention Example |
| 10 | K | 35 | 636.1 | 640 | 2000 | 1.10 | 10 | 666.1 | 680 | 20 | 0.85 | 800 | 50 | 10 | 5.1 | 820 | 150 | 10 | 4.6 | Yes | Yes | Invention Example |
| 11 | K | 10 | 636.1 | 640 | 2000 | 1.10 | 10 | 666.1 | 680 | 20 | 0.85 | 800 | 50 | 10 | 5.3 | 820 | 150 | 10 | 4.6 | Yes | Yes | Invention Example |
| 12 | K | 20 | 636.1 | 650 | 2000 | 1.10 | 10 | 666.1 | 680 | 20 | 0.85 | 800 | 50 | 10 | 5.0 | 820 | 150 | 10 | 4.7 | Yes | Yes | Invention Example |
| 13 | K | 20 | 636.1 | 680 | 2000 | 1.10 | 10 | 666.1 | 710 | 20 | 0.85 | 800 | 50 | 10 | 5.4 | 820 | 150 | 10 | 4.5 | Yes | Yes | Invention Example |
| 14 | K | 20 | 640.4 | 645 | 1000 | 1.05 | 10 | 670.4 | 680 | 20 | 0.85 | 800 | 50 | 10 | 5.3 | 820 | 150 | 10 | 4.5 | Yes | Yes | Invention Example |
| 15 | K | 20 | 627.5 | 640 | 3000 | 1.20 | 10 | 657.5 | 680 | 20 | 0.85 | 800 | 50 | 10 | 5.1 | 820 | 150 | 10 | 4.5 | Yes | Yes | Invention Example |
| 16 | K | 20 | 618.9 | 640 | 4000 | 1.30 | 10 | 648.9 | 680 | 20 | 0.85 | 800 | 50 | 10 | 5.4 | 820 | 150 | 10 | 4.6 | Yes | Yes | Invention Example |
| 17 | K | 20 | 636.1 | 640 | 2000 | 1.10 | 30 | 666.1 | 680 | 20 | 0.85 | 800 | 50 | 10 | 5.2 | 820 | 150 | 10 | 4.7 | Yes | Yes | Invention Example |
| 18 | K | 20 | 636.1 | 640 | 2000 | 1.10 | 20 | 666.1 | 680 | 20 | 0.85 | 800 | 50 | 10 | 5.4 | 820 | 150 | 10 | 4.5 | Yes | Yes | Invention Example |
| 19 | K | 20 | 636.1 | 640 | 2000 | 1.10 | 5 | 666.1 | 680 | 20 | 0.85 | 800 | 50 | 10 | 5.1 | 820 | 150 | 10 | 4.6 | Yes | Yes | Invention Example |
| 20 | K | 20 | 636.1 | 640 | 2000 | 1.10 | 10 | 666.1 | 670 | 20 | 0.85 | 800 | 50 | 10 | 5.3 | 820 | 150 | 10 | 4.5 | Yes | Yes | Invention Example |
| 21 | K | 20 | 636.1 | 640 | 2000 | 1.10 | 10 | 666.1 | 700 | 20 | 0.85 | 800 | 50 | 10 | 5.2 | 820 | 150 | 10 | 4.7 | Yes | Yes | Invention Example |
| 22 | K | 20 | 636.1 | 640 | 2000 | 1.10 | 10 | 666.1 | 750 | 20 | 0.85 | 800 | 50 | 10 | 5.0 | 820 | 150 | 10 | 4.5 | Yes | Yes | Invention Example |
| 23 | K | 20 | 636.1 | 640 | 2000 | 1.10 | 10 | 666.1 | 780 | 20 | 0.85 | 800 | 50 | 10 | 5.4 | 820 | 150 | 10 | 4.6 | Yes | Yes | Invention Example |
| 24 | K | 20 | 636.1 | 640 | 2000 | 1.10 | 10 | 666.1 | 680 | 23 | 0.90 | 800 | 50 | 10 | 5.1 | 820 | 150 | 10 | 4.6 | Yes | Yes | Invention Example |
| 25 | K | 20 | 636.1 | 640 | 2000 | 1.10 | 10 | 666.1 | 680 | 15 | 0.75 | 800 | 50 | 10 | 5.3 | 820 | 150 | 10 | 4.7 | Yes | Yes | Invention Example |
| 26 | K | 20 | 636.1 | 640 | 2000 | 1.10 | 10 | 666.1 | 680 | 20 | 0.85 | 800 | 50 | 10 | 5.0 | 820 | 150 | 10 | 4.5 | Yes | Yes | Invention Example |
| 27 | K | 20 | 636.1 | 640 | 2000 | 1.10 | 10 | 666.1 | 680 | 20 | 0.85 | 800 | 50 | 10 | 5.3 | 820 | 150 | 10 | 4.5 | Yes | No | Invention Example |
| 28 | B | 20 | 603.9 | 600 | 2000 | 1.10 | 10 | 633.9 | 630 | 20 | 0.85 | 800 | 50 | 10 | 5.1 | 820 | 150 | 10 | 4.5 | Yes | Yes | Invention Example |
| 29 | B | 20 | 603.9 | 605 | 2000 | 1.10 | 10 | 633.9 | 635 | 20 | 0.85 | 800 | 50 | 10 | 5.4 | 820 | 150 | 10 | 4.5 | Yes | Yes | Invention Example |
| 30 | C | 20 | 610.3 | 605 | 2000 | 1.10 | 10 | 640.3 | 635 | 20 | 0.85 | 800 | 50 | 10 | 5.3 | 820 | 150 | 10 | 4.7 | Yes | Yes | Invention Example |
| 31 | C | 20 | 610.3 | 615 | 2000 | 1.10 | 10 | 640.3 | 645 | 20 | 0.85 | 800 | 50 | 10 | 5.1 | 820 | 150 | 10 | 4.6 | Yes | Yes | Invention Example |
| 32 | D | 20 | 614.3 | 610 | 2000 | 1.10 | 10 | 644.3 | 640 | 20 | 0.85 | 800 | 50 | 10 | 5.2 | 820 | 150 | 10 | 4.6 | Yes | Yes | Invention Example |
| 33 | D | 20 | 614.3 | 615 | 2000 | 1.10 | 10 | 644.3 | 645 | 20 | 0.85 | 800 | 50 | 10 | 5.4 | 820 | 150 | 10 | 4.5 | Yes | Yes | Invention Example |
| 34 | E | 20 | 624.8 | 620 | 2000 | 1.10 | 10 | 654.8 | 650 | 20 | 0.85 | 800 | 50 | 10 | 5.1 | 820 | 150 | 10 | 4.7 | Yes | Yes | Invention Example |
| 35 | E | 20 | 624.8 | 625 | 2000 | 1.10 | 10 | 654.8 | 655 | 20 | 0.85 | 800 | 50 | 10 | 5.0 | 820 | 150 | 10 | 4.5 | Yes | Yes | Invention Example |
| 36 | F | 20 | 619.2 | 615 | 2000 | 1.10 | 10 | 649.2 | 645 | 20 | 0.85 | 800 | 50 | 10 | 5.2 | 820 | 150 | 10 | 4.5 | Yes | Yes | Invention Example |
| 37 | F | 20 | 619.2 | 620 | 2000 | 1.10 | 10 | 649.2 | 650 | 20 | 0.85 | 800 | 50 | 10 | 5.4 | 820 | 150 | 10 | 4.6 | Yes | Yes | Invention Example |
| 38 | G | 20 | 621.5 | 620 | 2000 | 1.10 | 10 | 651.5 | 650 | 20 | 0.85 | 800 | 50 | 10 | 5.1 | 820 | 150 | 10 | 4.7 | Yes | Yes | Invention Example |
| 39 | G | 20 | 621.5 | 625 | 2000 | 1.10 | 10 | 651.5 | 655 | 20 | 0.85 | 800 | 50 | 10 | 5.3 | 820 | 150 | 10 | 4.5 | Yes | Yes | Invention Example |
| 40 | H | 20 | 625.8 | 620 | 2000 | 1.10 | 10 | 655.8 | 650 | 20 | 0.85 | 800 | 50 | 10 | 5.3 | 820 | 150 | 10 | 4.5 | Yes | Yes | Invention Example |
| 41 | H | 20 | 625.8 | 630 | 2000 | 1.10 | 10 | 655.8 | 660 | 20 | 0.85 | 800 | 50 | 10 | 5.2 | 820 | 150 | 10 | 4.7 | Yes | Yes | Invention Example |
| 42 | I | 20 | 624.3 | 620 | 2000 | 1.10 | 10 | 654.3 | 650 | 20 | 0.85 | 800 | 50 | 10 | 5.1 | 820 | 150 | 10 | 4.5 | Yes | Yes | Invention Example |
| 43 | I | 20 | 624.3 | 630 | 2000 | 1.10 | 10 | 654.3 | 660 | 20 | 0.85 | 800 | 50 | 10 | 5.4 | 820 | 150 | 10 | 4.6 | Yes | Yes | Invention Example |
| 44 | J | 20 | 632.0 | 630 | 2000 | 1.10 | 10 | 662.0 | 660 | 20 | 0.85 | 800 | 50 | 10 | 5.0 | 820 | 150 | 10 | 4.7 | Yes | Yes | Invention Example |
| 45 | J | 20 | 632.0 | 635 | 2000 | 1.10 | 10 | 662.0 | 665 | 20 | 0.85 | 800 | 50 | 10 | 5.2 | 820 | 150 | 10 | 4.7 | Yes | Yes | Invention Example |
| 46 | L | 20 | 627.3 | 625 | 2000 | 1.10 | 10 | 657.3 | 655 | 20 | 0.85 | 800 | 50 | 10 | 5.1 | 820 | 150 | 10 | 4.5 | Yes | Yes | Invention Example |
| 47 | L | 20 | 627.3 | 630 | 2000 | 1.10 | 10 | 657.3 | 660 | 20 | 0.85 | 800 | 50 | 10 | 5.0 | 820 | 150 | 10 | 4.7 | Yes | Yes | Invention Example |
| 48 | M | 20 | 637.7 | 635 | 2000 | 1.10 | 10 | 667.7 | 665 | 20 | 0.85 | 800 | 50 | 10 | 5.1 | 820 | 150 | 10 | 4.6 | Yes | Yes | Invention Example |
| 49 | M | 20 | 637.7 | 640 | 2000 | 1.10 | 10 | 667.7 | 670 | 20 | 0.85 | 800 | 50 | 10 | 5.0 | 820 | 150 | 10 | 4.6 | Yes | Yes | Invention Example |
| 50 | A | 20 | 594.9 | 600 | 2000 | 1.10 | 10 | 624.9 | 630 | 20 | 0.85 | 800 | 50 | 10 | 5.2 | 820 | 150 | 10 | 4.5 | Yes | Yes | Reference Example |
| 51 | N | 20 | 604.7 | 590 | 2000 | 1.10 | 10 | 634.7 | 630 | 20 | 0.85 | 800 | 50 | 10 | 5.1 | 820 | 150 | 10 | 4.6 | Yes | Yes | Invention Example |
| 52 | N | 20 | 604.7 | 610 | 2000 | 1.10 | 10 | 634.7 | 640 | 20 | 0.85 | 800 | 50 | 10 | 5.2 | 820 | 150 | 10 | 4.5 | Yes | Yes | Invention Example |
| 53 | O | 20 | 634.9 | 630 | 2000 | 1.10 | 10 | 664.9 | 660 | 20 | 0.85 | 800 | 50 | 10 | 5.0 | 820 | 150 | 10 | 4.7 | Yes | Yes | Invention Example |
| 54 | O | 20 | 634.9 | 640 | 2000 | 1.10 | 10 | 664.9 | 670 | 20 | 0.85 | 800 | 50 | 10 | 5.2 | 820 | 150 | 10 | 4.6 | Yes | Yes | Invention Example |

The results obtained as described above are shown in Table 5.

[Table 5]

| No. | Coating Appearance | TS (MPa) | LME Cracking Resistance | Amount of Diffusible Hydrogen in Steel Sheet | | Damage to Furnace Body | Classification |
|---|---|---|---|---|---|---|---|
| | | | | (mass-ppm) | Rating | | |
| 1 | ○ | 1298 | ◎ | 0.05 | ◎+ | ○ | Invention Example |
| 2 | ○ | 1304 | ◎ | 0.06 | ◎+ | ○ | Invention Example |
| 3 | ○ | 1303 | ◎ | 0.05 | ◎+ | ○ | Invention Example |

(continued)

| No. | Coating Appearance | TS (MPa) | LME Cracking Resistance | Amount of Diffusible Hydrogen in Steel Sheet | | Damage to Furnace Body | Classification |
|---|---|---|---|---|---|---|---|
| | | | | (mass-ppm) | Rating | | |
| 4 | ○ | 1299 | ◎ | 0.04 | ◎+ | ○ | Invention Example |
| 5 | ○ | 1303 | ◎ | 0.03 | ◎+ | ○ | Invention Example |
| 6 | ○ | 1297 | ○ | 0.05 | ◎+ | ○ | Invention Example |
| 7 | ○ | 1308 | ◎ | 0.06 | ◎+ | ○ | Invention Example |
| 8 | ○ | 1301 | ◎ | 0.05 | ◎+ | ○ | Invention Example |
| 9 | ◎ | 1297 | ◎ | 0.03 | ◎+ | ○ | Invention Example |
| 10 | ◎ | 1295 | ◎ | 0.04 | ◎+ | ○ | Invention Example |
| 11 | ◎ | 1302 | ◎ | 0.06 | ◎+ | ○ | Invention Example |
| 12 | ◎ | 1303 | ◎ | 0.06 | ◎+ | ○ | Invention Example |
| 13 | ◎ | 1304 | ◎ | 0.05 | ◎+ | ○ | Invention Example |
| 14 | ◎ | 1302 | ◎ | 0.05 | ◎+ | ○ | Invention Example |
| 15 | ◎ | 1307 | ◎ | 0.03 | ◎+ | ○ | Invention Example |
| 16 | ◎ | 1306 | ◎ | 0.05 | ◎+ | ○ | Invention Example |
| 17 | ◎ | 1299 | ◎ | 0.06 | ◎+ | ○ | Invention Example |
| 18 | ◎ | 1295 | ◎ | 0.04 | ◎+ | ○ | Invention Example |
| 19 | ◎ | 1293 | ◎ | 0.05 | ◎+ | ○ | Invention Example |
| 20 | ◎ | 1296 | ◎ | 0.04 | ◎+ | ○ | Invention Example |
| 21 | ◎ | 1295 | ◎ | 0.06 | ◎+ | ○ | Invention Example |
| 22 | ◎ | 1297 | ◎ | 0.03 | ◎+ | ○ | Invention Example |
| 23 | ◎ | 1299 | ◎ | 0.05 | ◎+ | ○ | Invention Example |
| 24 | ◎ | 1301 | ◎ | 0.04 | ◎+ | ○ | Invention Example |
| 25 | ◎ | 1302 | ◎ | 0.05 | ◎+ | ○ | Invention Example |
| 26 | ◎ | 1303 | ◎ | 0.05 | ◎+ | ○ | Invention Example |
| 27 | ◎ | 1300 | ◎ | 0.04 | ◎+ | ○ | Invention Example |
| 28 | ○ | 1219 | ◎ | 0.05 | ◎+ | ○ | Invention Example |
| 29 | ◎ | 1222 | ◎ | 0.06 | ◎+ | ○ | Invention Example |
| 30 | ○ | 986 | ◎ | 0.05 | ◎+ | ○ | Invention Example |
| 31 | ◎ | 984 | ◎ | 0.05 | ◎+ | ○ | Invention Example |
| 32 | ○ | 960 | ◎ | 0.04 | ◎+ | ○ | Invention Example |
| 33 | ◎ | 957 | ◎ | 0.05 | ◎+ | ○ | Invention Example |
| 34 | ○ | 1426 | ◎ | 0.06 | ◎+ | ○ | Invention Example |
| 35 | ◎ | 1431 | ◎ | 0.05 | ◎+ | ○ | Invention Example |
| 36 | ○ | 752 | ◎ | 0.04 | ◎+ | ○ | Invention Example |
| 37 | ◎ | 746 | ◎ | 0.06 | ◎+ | ○ | Invention Example |
| 38 | ○ | 835 | ◎ | 0.05 | ◎+ | ○ | Invention Example |
| 39 | ◎ | 837 | ◎ | 0.04 | ◎+ | ○ | Invention Example |
| 40 | ○ | 812 | ◎ | 0.05 | ◎+ | ○ | Invention Example |

(continued)

| No. | Coating Appearance | TS (MPa) | LME Cracking Resistance | Amount of Diffusible Hydrogen in Steel Sheet | | Damage to Furnace Body | Classification |
|---|---|---|---|---|---|---|---|
| | | | | (mass-ppm) | Rating | | |
| 41 | ◎ | 819 | ◎ | 0.05 | ◎+ | ○ | Invention Example |
| 42 | ○ | 613 | ◎ | 0.05 | ◎+ | ○ | Invention Example |
| 43 | ◎ | 615 | ◎ | 0.05 | ◎+ | ○ | Invention Example |
| 44 | ○ | 1020 | ◎ | 0.05 | ◎+ | ○ | Invention Example |
| 45 | ◎ | 1019 | ◎ | 0.06 | ◎+ | ○ | Invention Example |
| 46 | ○ | 789 | ◎ | 0.04 | ◎+ | ○ | Invention Example |
| 47 | ◎ | 791 | ◎ | 0.05 | ◎+ | ○ | Invention Example |
| 48 | ○ | 1185 | ◎ | 0.06 | ◎+ | ○ | Invention Example |
| 49 | ◎ | 1189 | ◎ | 0.05 | ◎+ | ○ | Invention Example |
| 50 | ◎ | 1031 | ◎ | 0.05 | ◎+ | ○ | Reference Example |
| 51 | ○ | 1214 | ◎ | 0.05 | ◎+ | ○ | Invention Example |
| 52 | ◎ | 1216 | ◎ | 0.04 | ◎+ | ○ | Invention Example |
| 53 | ○ | 1298 | ◎ | 0.07 | ◎+ | ○ | Invention Example |
| 54 | ◎ | 1295 | ◎ | 0.05 | ◎+ | ○ | Invention Example |

As indicated by Table 5, despite the fact that the high-strength hot-dip galvanized steel sheets of Invention Examples contained Si, the steel sheets had excellent LME cracking resistance, had a good coating appearance, had a low amount of diffusible hydrogen in the steel sheet, could be expected to exhibit good resistance to delayed fracture, and did not do much damage to the furnace body. In addition, because of the use of a direct firing furnace having two separated zones in the oxidation-heating step, high levels of LME cracking resistance, coating appearance, and a decrease in the amount of diffusible hydrogen in steel were all achieved.

[Example 3]

In a similar manner, 1.2-mm cold rolled steel sheets each having the chemical composition shown in Table 1 were subjected to annealing and hot-dip galvanizing in a CGL. The oxidation-heating was performed in a direct firing furnace including a nozzle-mix burner and having two separated zones, under the conditions shown in Table 6. The reduction-annealing was performed in a radiant tube furnace having two zones separated by seal rolls, under the conditions shown in Table 6. Thereafter, cooling was performed. Regarding the reduction-annealing, the hydrogen concentrations for the first reduction-annealing and the second reduction-annealing, in the annealing furnace, were both lowered.

Subsequently, hot-dip galvanizing was performed with a bath containing 0.135% Al and having a temperature of 460°C, and thereafter, the coating weight was adjusted to be approximately 50 g/m$^2$ by gas wiping. In some cases, an alloying treatment was performed. Referring to Table 6, during the first reduction-annealing, the steel sheet was held at the reached maximum temperature of the steel sheet for the period shown in the table, and during the second reduction-annealing, the steel sheet was held at the reached maximum temperature of the steel sheet for the period shown in the table.

Subsequently, the high-strength hot-dip galvanized steel sheets, obtained as described above, were evaluated for appearance properties and investigated for tensile properties in a manner similar to that of Example 1. In addition, LME cracking resistance, dehydrogenation behavior, and damage to the furnace body were evaluated.

[Table 6]

| No. | Steel Type | Oxidation Treatment | | | | | | | | | | Reduction-Annealing | | | | | | | | Hot-Dip Galvanizing | Alloying Treatment | Classification |
|---|---|---|---|---|---|---|---|---|---|---|---|---|---|---|---|---|---|---|---|---|---|---|
| | | First Stage-First Heating | | | | | Second Stage-Second Heating | | | | | First Reduction-Annealing | | | | Second Reduction-Annealing | | | | | | |
| | | Average Heating Rate Over Range of 200°C and Greater | $T_1$ | Reached Maximum Temperature of Steel Sheet | $O_2$ Concentration | Air Ratio | Average Heating Rate Over Range Greater Than $T_1$ | $T_2$ | Reached Maximum Temperature of Steel Sheet | $O_2$ Concentration | Air Ratio | Reached Maximum Temperature of Steel Sheet | Period | Dew Point | $H_2$ Concentration | Reached Maximum Temperature of Steel Sheet | Period | Dew Point | $H_2$ Concentration | | | |
| | | (°C/s) | °C | (°C) | (vol-ppm) | | (°C/s) | °C | (°C) | (vol-ppm) | | (°C) | (s) | (°C) | (vol.%) | (°C) | (s) | (°C) | (vol.%) | | | |
| 1 | K | 20 | 636.1 | 640 | 2000 | 1.10 | 10 | 666.1 | 680 | 20 | 0.85 | 800 | 50 | 10 | 11.8 | 820 | 150 | 10 | 4.1 | Yes | Yes | Invention Example |
| 2 | K | 20 | 636.1 | 640 | 2000 | 1.10 | 10 | 666.1 | 680 | 20 | 0.85 | 800 | 50 | 10 | 8.3 | 820 | 150 | 10 | 4.3 | Yes | Yes | Invention Example |
| 3 | K | 20 | 636.1 | 640 | 2000 | 1.10 | 10 | 666.1 | 680 | 20 | 0.85 | 800 | 50 | 10 | 5.1 | 820 | 150 | 10 | 4.7 | Yes | Yes | Invention Example |
| 4 | K | 21 | 636.1 | 640 | 2000 | 1.10 | 10 | 666.1 | 680 | 20 | 0.85 | 800 | 50 | 10 | 25.0 | 820 | 150 | 10 | 2.1 | Yes | Yes | Invention Example |
| 5 | K | 22 | 636.1 | 640 | 2000 | 1.10 | 10 | 666.1 | 680 | 20 | 0.85 | 800 | 50 | 10 | 15.0 | 820 | 150 | 10 | 2.5 | Yes | Yes | Invention Example |
| 6 | K | 20 | 636.1 | 650 | 2000 | 1.10 | 10 | 666.1 | 680 | 20 | 0.85 | 800 | 50 | 10 | 11.9 | 820 | 150 | 10 | 2.1 | Yes | Yes | Invention Example |
| 7 | K | 20 | 636.1 | 680 | 2000 | 1.10 | 10 | 666.1 | 680 | 20 | 0.85 | 800 | 50 | 10 | 7.9 | 820 | 150 | 10 | 2.5 | Yes | Yes | Invention Example |
| 8 | K | 20 | 636.1 | 640 | 2000 | 1.10 | 10 | 666.1 | 680 | 20 | 0.85 | 800 | 50 | 10 | 5.5 | 820 | 150 | 10 | 2.8 | Yes | Yes | Invention Example |

The results obtained as described above are shown in Table 7.

[Table 7]

| No. | Coating Appearance | TS (MPa) | LME Cracking Resistance | Amount of Diffusible Hydrogen in Steel Sheet | | Damage to Furnace Body | Classification |
|---|---|---|---|---|---|---|---|
| | | | | (mass-ppm) | Rating | | |
| 1 | ◎ | 1291 | ◎ | 0.06 | ◎+ | ○ | Invention Example |
| 2 | ◎ | 1301 | ◎ | 0.05 | ◎+ | ○ | Invention Example |
| 3 | ◎ | 1300 | ◎ | 0.04 | ◎+ | ○ | Invention Example |
| 4 | ◎ | 1297 | ◎ | 0.06 | ◎+ | ○ | Invention Example |
| 5 | ◎ | 1299 | ◎ | 0.05 | ◎+ | ○ | Invention Example |
| 6 | ◎ | 1298 | ◎ | 0.01 | ◎++ | ○ | Invention Example |
| 7 | ◎ | 1297 | ◎ | 0.00 | ◎++ | ○ | Invention Example |
| 8 | ◎ | 1302 | ◎ | 0.00 | ◎++ | ○ | Invention Example |

As indicated by Table 7, despite the fact that the high-strength hot-dip galvanized steel sheets of Invention Examples contained Si, the steel sheets had excellent LME cracking resistance, had a good coating appearance, had a low amount of diffusible hydrogen in the steel sheet, could be expected to exhibit good resistance to delayed fracture, and did not do much damage to the furnace body. In addition, because of the lowered hydrogen concentration in the annealing furnace, the amount of diffusible hydrogen in steel was reduced to an extremely low level.

Industrial Applicability

High-strength hot-dip galvanized steel sheets prepared by the manufacturing method of the present invention have an excellent appearance quality and excellent resistance to resistance-welding cracking and are those in which degradation in resistance to delayed fracture due to hydrogen embrittlement can be inhibited. Accordingly, the steel sheets can be used as surface-treated steel sheets for reducing the weight and increasing the strength of the vehicle bodies of automobiles.

Reference Signs List

1    test hot-dip galvanized steel sheet
2    test specimen
3    spacer
4    electrode
5    stand
6    nugget

7     nugget diameter
8     cut line

**Claims**

1.  A method for manufacturing a high-strength hot-dip galvanized steel sheet, the method comprising:

    subjecting a steel sheet containing, in mass%, Si in an amount of 0.45% or greater and 2.0% or less to an oxidation treatment;
    subsequently subjecting the steel sheet to reduction-annealing; and
    subsequently subjecting the steel sheet to hot-dip galvanizing, wherein
    the oxidation treatment comprises oxidizing the steel sheet in an oxidation step in which the steel sheet is caused to have a temperature within a range of 500°C or greater and 800°C or less in an atmosphere containing $O_2$ in an amount of 500 vol-ppm or greater and $N_2$,
    the reduction-annealing is carried out in a first stage and a second stage that use different respective atmospheres,
    the first stage comprises first reduction-annealing that comprises holding the steel sheet at a temperature of 650°C or greater and 900°C or less for a period of 20 seconds or more and 150 seconds or less in an atmosphere that is an annealing atmosphere, the atmosphere having a dew point of -45°C or greater and +20°C or less and containing hydrogen in an amount of 5.0 vol.% or greater and 25 vol.% or less with a balance of $N_2$, and
    the second stage comprises second reduction-annealing that comprises holding, after the steel sheet undergoes the first reduction-annealing, the steel sheet at a temperature of 700°C or greater and 950°C or less for a period of 30 seconds or more and 300 seconds or less in an atmosphere that is an annealing atmosphere, the atmosphere having a dew point of -10°C or greater and +20°C or less and containing hydrogen in an amount of 2.0 vol.% or greater and 8.0 vol.% or less with a balance of $N_2$, the hydrogen being present in a hydrogen concentration adjusted to satisfy $H_2a > H_2b$, where $H_2a$ is the hydrogen concentration for the first reduction-annealing of the first stage, and $H_2b$ is the hydrogen concentration for the second reduction-annealing of the second stage.

2.  The method for manufacturing a high-strength hot-dip galvanized steel sheet according to Claim 1, wherein the reduction-annealing is carried out in an annealing furnace configured to perform annealing in two or more different atmospheres in two or more sections divided in a steel sheet traveling direction.

3.  The method for manufacturing a high-strength hot-dip galvanized steel sheet according to Claim 1 or 2, further comprising performing an alloying treatment on a hot-dip galvanized coating after the steel sheet is subjected to the hot-dip galvanizing.

4.  The method for manufacturing a high-strength hot-dip galvanized steel sheet according to any one of Claims 1 to 3, wherein the oxidation treatment is performed in a step of heating the steel sheet that is performed as a step preceding the reduction-annealing.

5.  The method for manufacturing a high-strength hot-dip galvanized steel sheet according to Claim 4, wherein the oxidation treatment is performed over a temperature spread of at least 50°C or greater within the range of 500°C or greater and 800°C or less.

6.  The method for manufacturing a high-strength hot-dip galvanized steel sheet according to any one of Claims 1 to 5, wherein the oxidation treatment comprises oxidizing a surface of the steel sheet in a direct firing furnace (DFF) with an air ratio in at least a portion of the atmosphere in the furnace being 1.0 or greater.

7.  The method for manufacturing a high-strength hot-dip galvanized steel sheet according to any one of Claims 1 to 6, wherein

    the oxidation treatment is carried out in a direct firing furnace configured to perform oxidation in two or more atmospheres in two or more sections divided in a steel sheet traveling direction,
    in a first heating zone located upstream in the furnace, the steel sheet is heated at an average heating rate over a range of 200°C and greater of 10°C/s or greater and 50°C/s or less to a temperature greater than or equal to $T_1$ (°C), where $T_1$ is calculated from equation (1) below, in which $\alpha$ is an air ratio associated with a temperature range over which the oxidation treatment is performed, and
    in a second heating zone located downstream in the furnace, the steel sheet, after passing through the first heating zone, is heated at an average heating rate over a range greater than $T_1$ of 5°C/s or greater and 30°C/s or less to a temperature greater than or equal to $T_2$ (°C), with an air ratio being $\leq$ 0.9, where $T_2$ is calculated from equation (2) below,

$$T_1 = 28.2[Si] + 7.95[Mn] - 86.2\alpha + 666 \qquad (1)$$

$$T_2 = T_1 + 30 \qquad (2)$$

where [Si] is a content (mass%) of Si present in the steel sheet, and [Mn] is a content (mass%) of Mn present in the steel sheet.

8. The method for manufacturing a high-strength hot-dip galvanized steel sheet according to any one of Claims 1 to 7, wherein the oxidation treatment is performed in an atmosphere containing one or more of CO, $CO_2$, $H_2O$, and $NO_x$, in addition to the $O_2$ in an amount of 500 vol-ppm or greater and the $N_2$.

9. The method for manufacturing a high-strength hot-dip galvanized steel sheet according to any one of Claims 1 to 5 and 8, wherein the oxidation treatment is performed in a radiant tube heating furnace.

10. The method for manufacturing a high-strength hot-dip galvanized steel sheet according to any one of Claims 1 to 5, 8, and 9, wherein the reduction-annealing is performed in a radiant tube heating and soaking furnace.

11. The method for manufacturing a high-strength hot-dip galvanized steel sheet according to any one of Claims 1 to 10, wherein the annealing atmosphere for the second reduction-annealing contains hydrogen in an amount of 2.0 vol.% or greater and less than 5.0 vol.% with a balance of $N_2$.

12. The method for manufacturing a high-strength hot-dip galvanized steel sheet according to any one of Claims 1 to 11, wherein the annealing atmosphere for the first reduction-annealing contains hydrogen in an amount of 5.0 vol.% or greater and 12 vol.% or less with a balance of $N_2$, and the annealing atmosphere for the second reduction-annealing contains hydrogen in an amount of 2.0 vol.% or greater and less than 3.0 vol.% with a balance of $N_2$.

# FIG. 1

# FIG. 2

## INTERNATIONAL SEARCH REPORT

| International application No. |
|---|
| **PCT/JP2023/016785** |

### A. CLASSIFICATION OF SUBJECT MATTER

*C21D 9/46*(2006.01)i; *C21D 9/56*(2006.01)i; *C23C 2/02*(2006.01)i; *C23C 2/06*(2006.01)i; *C23C 2/28*(2006.01)i; *C22C 38/00*(2006.01)n; *C22C 38/06*(2006.01)n; *C22C 38/60*(2006.01)n
FI:   C21D9/46 J; C21D9/56 101B; C23C2/02; C23C2/06; C23C2/28; C22C38/00 301T; C22C38/06; C22C38/60

According to International Patent Classification (IPC) or to both national classification and IPC

### B. FIELDS SEARCHED

Minimum documentation searched (classification system followed by classification symbols)

C21D9/46; C21D9/56; C23C2/002/40; C22C38/00-38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-149307 A (JFE STEEL CORPORATION) 09 August 2012 (2012-08-09) claims | 1-12 |
| A | WO 2021/166350 A1 (JFE STEEL CORPORATION) 26 August 2021 (2021-08-26) claims | 1-12 |
| A | JP 2014-525986 A (THYSSENKRUPP STEEL EUROPE AG) 02 October 2014 (2014-10-02) claims | 1-12 |
| A | WO 2014/073520 A1 (NIPPON STEEL & SUMITOMO METAL CORPORATION) 15 May 2014 (2014-05-15) claims, tables 2-1, 2-2 | 1-12 |

☐ Further documents are listed in the continuation of Box C.          ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/016785**

| Patent document cited in search report | | | Publication date (day/month/year) | Patent family member(s) | | | Publication date (day/month/year) |
|---|---|---|---|---|---|---|---|
| JP | 2012-149307 | A | 09 August 2012 | (Family: none) | | | |
| WO | 2021/166350 | A1 | 26 August 2021 | EP claims | 4108793 | A1 | |
| | | | | CN | 115003847 | A | |
| JP | 2014-525986 | A | 02 October 2014 | US claims | 2014/0251505 | A1 | |
| | | | | WO | 2013/007578 | A2 | |
| WO | 2014/073520 | A1 | 15 May 2014 | EP claims, tables 2-1, 2-2 | 2918696 | A1 | |
| | | | | US | 2015/0275345 | A1 | |
| | | | | US | 2019/0078190 | A1 | |
| | | | | CN | 104769146 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5652219 B
- JP 6052270 B

- JP 6172297 B